# EUROPEAN PATENT APPLICATION

(11) **EP 4 651 463 A1**
(43) Date of publication of application: **19.11.2025**
(21) Application number: 24753547.9
(22) Date of filing: 01.02.2024
(51) Int. Cl.: H04L 65/1083, H04L 65/40, H04L 65/1016, H04L 65/1101, H04W 28/02

(54) **METHOD AND DEVICE FOR ESTABLISHING DATA CHANNEL IN WIRELESS COMMUNICATION SYSTEM**

(30) Priority: 10.02.2023 KR 20230018096; 06.03.2023 KR 20230029094; 17.05.2023 KR 20230063987
(71) Applicant: Samsung Electronics Co., Ltd., Suwon-si, Gyeonggi-do 16677 (KR)
(72) Inventor: YANG, Hyunkoo, Suwon-si, Gyeonggi-do 16677 (KR)
(74) Representative: Gulde & Partner
(86) International application number: PCT/KR2024/001520
(87) International publication number: WO 2024/167218

(57) **Abstract**

The present disclosure relates to a 5G or 6G communication system for supporting higher data transmission rates. A method according to the present disclosure may comprise the operations of: receiving, from an originating UE, a first SDP proposal for establishing a data channel between an originating network to which the originating UE belongs and a destination network to which a destination UE belongs; generating a second SDP proposal including first and second media descriptions on the basis of the first SDP proposal, wherein first attribute information, indicating that the first media description relates to a first bootstrap data channel between the originating UE and the destination network, is added to the first media description, and second attribute information, indicating that the second media description relates to a second bootstrap data channel between the originating network and the destination UE, is added to the second media description; and transmitting the second SDP proposal to the destination network.

## Description

### [Technical Field]

The disclosure relates to a method and a device for establishing a data channel in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

The disclosure discloses a method for end-to-end session sharing between IMS applications in a wireless communication system.

The disclosure provides a method and a device for establishing a data channel in a wireless communication system

### [Technical Solution]

According to an embodiment of the disclosure, there is provided a method of a network entity in a wireless communication system, and the method includes: receiving, from an originating UE, a first session description protocol (SDP) offer message for establishing a data channel between an originating network to which the originating UE belongs and a terminating network to which a terminating UE belongs; generating a second SDP offer message including a first media description and a second media description, based on the first SDP offer message, wherein first attribute information indicating that the first media description is related to a first bootstrap data channel between the originating UE and the terminating network is added to the first description, and wherein second attribute information indicating that the second media description is related to a second bootstrap data channel between the originating network and the terminating UE is added to the second media description; and transmitting, to the terminating network, the second SDP offer message.

According to an embodiment of the disclosure, there is provided a method of a user equipment, UE, in a wireless communication system, and the method includes: transmitting, to a network entity, a first session description protocol (SDP) offer message for establishing a data channel between an originating network to which the originating UE belongs and a terminating network to which a terminating UE belongs, wherein the first SDP offer message is modified by the network entity to include at least one of attribute information that enables the terminating network to distinguish a first media description related to a first bootstrap data channel between the originating UE and the terminating network and a second media description related to a second bootstrap data channel between the originating network and the terminating UE; and receiving, from the network entity, an SDP answer message corresponding to the first SDP offer message.

According to an embodiment of the disclosure, there is provided a network entity including a transceiver and a processor connected to the transceiver in a wireless communication system, and the processor is configured to: receive, from an originating UE through the transceiver, a first session description protocol (SDP) offer message for establishing a data channel between an originating network to which the originating UE belongs and a terminating network to which a terminating UE belongs; generate a second SDP offer message including a first media description and a second media description, based on the first SDP offer message, wherein first attribute information indicating that the first media description is related to a first bootstrap data channel between the originating UE and the terminating network is added to the first media description and wherein second attribute information indicating that the second media description is related to a second bootstrap data channel between the originating network and the terminating UE is added to the second media description; and transmit, to the terminating network through the transceiver, the second SDP offer message.

According to an embodiment of the disclosure, there is provided a UE including a transceiver and a processor connected to the transceiver in a wireless communication system, and the processor is configured to: transmit, to a network entity through the transceiver, a first session description protocol (SDP) offer message for establishing a data channel between an originating network to which the originating UE belongs and a terminating network to which a terminating UE belongs, wherein the first SDP offer message is modified by the network entity to include at least one of attribute information that enables the terminating network to distinguish a first media description related to a first bootstrap data channel between the originating UE and the terminating network and a second media description related to a second bootstrap data channel between the originating network and the terminating UE; and receive, from the network entity through the transceiver, an SDP answer message corresponding to the first SDP offer message.

A method of a first client in a communication system according to an embodiment may include: transmitting an SDP offer for establishing one or more bootstrap data channels to a first network entity; receiving an SDP answer corresponding to the SDP offer from the first network entity; establishing one or more bootstrap data channels with each of at least one network entity of the first network entity and a second network entity, based on the SDP answer; and obtaining a data channel application through each established bootstrap data channel.

A method of a second client in a communication system according to an embodiment may include: receiving an SDP offer for establishing one or more bootstrap data channels from a second network entity; transmitting an SDP answer corresponding to the SDP offer to the second network entity; establishing one or more bootstrap data channels with each of at least one network entity of a first network entity and the second network entity, based on the SDP answer; and obtaining a data channel application through each established bootstrap data channel.

A method of a first network entity in a communication system according to an embodiment may include: receiving an SDP offer for establishing one or more bootstrap data channels from a first client; modifying the SDP offer as needed by the first network entity and transmitting the SDP offer to a second network entity; receiving an SDP answer corresponding to the modified SDP offer from the second network entity; modifying the received SDP answer as needed by the first network and transmitting the SDP answer to the first client; establishing one or more bootstrap data channels according to a request from at least one of the first client or a second client; and providing a data channel application through the established bootstrap data channels.

A method of a second network entity in a communication system according to an embodiment may include: receiving an SDP offer for establishing one or more bootstrap data channels from a first network entity; modifying the SDP offer as needed by the second network entity and transmitting the SDP offer to a second client; receiving an SDP answer corresponding to the modified SDP offer from the second client; modifying the SDP answer as needed by the second network and transmitting the SDP answer to the first network entity; establishing one or more bootstrap data channels according to a request from at least one of a first terminal or a second terminal; and providing a data channel application through the established bootstrap data channels.

A method of a first client in a communication system according to an embodiment may include: transmitting an SDP offer for establishing one or more data channels required by each obtained data channel application to a first network entity; receiving an SDP answer corresponding to the SDP offer from the first network entity; establishing one or more data channels associated with at least one of the first network entity, a second network entity, or a second client, based on the answer; and exchanging data channel application data through the established data channels.

A method of a second client in a communication system according to an embodiment may include: receiving an SDP offer for establishing one or more data channels from a second network entity; transmitting an SDP answer corresponding to the SDP offer to the second network entity; establishing a data channel with a data channel end point, based on the SDP answer; and exchanging data channel application data through the established data channel, and when an data channel application associated with the data channels requested to be established by the SDP offer is not obtained, a process of obtaining the data channel application through a pre-established bootstrap data channel or a new bootstrap channel included in the SDP offer may be established.

A method of a first network entity in a communication system according to an embodiment may include: receiving an SDP offer for establishing an application data channel from a first client; modifying the SDP offer as needed by the first network entity and transmitting the SDP offer to a data channel end point; receiving an SDP answer corresponding to the modified SDP offer; and modifying the SDP answer as needed by the first network entity and transmitting the SDP answer to the first client. The data channel end point may be at least one of the first network entity, a second network entity, or a second client. When the data channel end point is the first network entity, the method may further include establishing a data channel with at least one of the first client of the second client and exchanging data channel application data.

### [Brief Description of Drawings]

FIG. 1 illustrates a web application providing structure according to various embodiments of the disclosure;
FIG. 2 illustrates an Internet protocol multimedia subsystem (IMS) network architecture according to various embodiments of the disclosure;
FIG. 3 illustrates an example of an interaction between an IMS and a 5GC according to various embodiments of the disclosure;
FIG. 4 illustrates a session initiation protocol (SIP) operation procedure in a mobile communication system according to various embodiments of the disclosure;
FIG. 5 illustrates a session description protocol (SDP) negotiation procedure for a real-time interaction service in a communication system according to various embodiments of the disclosure;
FIG. 6 illustrates a network structure including a data channel server in a communication system according to various embodiments of the disclosure;
FIG. 7 illustrates a UE protocol stack supporting a data channel application in a communication system according to various embodiments of the disclosure;
FIG. 8 illustrates a bootstrap data channel establishment procedure in a communication system according to various embodiments of the disclosure;
FIG. 9 illustrates an SDP generation procedure of a user terminal supporting one or more data channel applications in a communication system according to various embodiments of the disclosure;
FIG. 10 illustrates an SDP generation procedure of a user terminal supporting one or more data channel applications in a communication system according to various embodiments of the disclosure;
FIG. 11 illustrates an internal structure of a network entity in a wireless communication system according to various embodiments of the disclosure.
FIG. 12 illustrates an internal structure of a UE in a wireless communication system according to an embodiment.

### [Mode for Carrying out the Invention]

In describing the disclosure below, a detailed description of known functions or configurations will be omitted when it is determined that the description may make the subject matter of the disclosure unnecessarily unclear.

For the same reason, in the accompanying drawings, some elements may be exaggerated, omitted, or schematically illustrated.

It will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data procesisng apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description, 5G (NR) or a 5G (NR) system may be described by way of example, but the embodiments of the disclosure may also be applied to other communication systems having similar technical backgrounds or channel types. In addition, based on determinations by those skilled in the art, the disclosure may also be applied to other communication systems through some modifications without significantly departing from the scope of the disclosure.

Hereinafter, embodiments of the disclosure will be described in detail in conjunction with the accompanying drawings.

Embodiments of the disclosure relate to a method and a device for providing a data channel application in a communication system. For example, the disclosure relates to a method and a device for providing a data channel application in a communication system that provides a real-time interaction service.

Telephony was first invented in the late 19th century, and mobile telephony became popular in the late 20th century. With development of mobile communication technology, a video telephony service that allows users to talk over the telephone while seeing each other's images has been supported, and a 5th-generation (5G) mobile communication system is expected to provide a new-level real-time interaction service including a touch and feel through a call with a distant counterpart.

An IP multimedia subsystem (IMS) is a technology for providing a multimedia service, such as voice, audio, video, and data, based on the Internet protocol (IP). IMS basically uses general-purpose Internet-based technologies and standardized network functions, thereby pursuing improvement in price competitiveness of services and rapid development and changes of services. The IMS is independent of an access network, and enables applications on different networks to easily interoperate with an improved session management function, promoting global interoperation between services and conversion of wired and wireless networks. The IMS is initially proposed for interoperability and conversion between different mobile communication systems in an All-IP wideband code division multiple access (W-CDMA) network, but is currently expanding into a technology that supports not only a mobile communication system but also various wired and wireless integrated networks based on an IP network.

The IMS supports use of a data channel capable of transmitting not only a voice and a video but also an arbitrary data stream within the same session. The data channel may have a transmission requirement, such as latency, robustness, and a bandwidth, depending on purpose of use and characteristics of data to be transmitted, and an IMS operator may establish the data channel considering the requirement. A telephone service provided by the operator may provide global user identification and contact, user authentication, mobility, session control, quality-of-service (QoS), security, and robustness based on a telephone number, and use of a data channel combined with a telephone service enables combination of an advantage of the telephone service and a web technology.

A web application hosted on the Internet is identifiable and obtainable by an HTTP URL, and for a plurality of users to use a service provided by the same web application, service access information, such as a URL, may be shared by a separate method not provided by the web application. A data channel application utilizing an IMS data channel may be selected by an operator, based on call context information (e.g., a user identifier (ID)), and the selected data channel application is distributed to a UE by a data channel server through a special-purpose data channel called a bootstrap data channel. The UE may transmit a root URL ("/") request via the bootstrap data channel to download an HTML web document, JavaScript, an image, and a style sheet that form the data channel application. To provide various experiences intended by a service provider for participants in a real-time interaction service, a UE needs to be able to run one or more data channel applications. Since each data channel application may manage only a data channel necessary to implement a service logic thereof, a method for a UE to integrate and manage requests from one or more data channel applications is required.

A method for providing a data channel application in a mobile communication system according to an embodiment may include: establishing bootstrap data channels for providing the data channel application between one or more data channel servers and service users, respectively; providing one or more data channel applications selected by a network provider or selected by a user according to call context information to the service users through each of the bootstrap data channels; establishing an additional data channel required for an operation of the one or more data channel applications between a user and a data channel server or between users; and exchanging data channel application data by using the data channel.

A method for receiving a data channel application in a mobile communication system according to an embodiment may include: establishing one or more bootstrap data channels for obtaining the data channel application with one or more data channel servers, respectively; obtaining a data channel application selected by a network provider or selected by a user according to call context information through each of the bootstrap data channels; establishing an additional data channel required for an operation of the one or more data channel applications between a user and a data channel server or between users; and exchanging data channel application data by using the data channel.

According to disclosed embodiments, a real-time interaction service may be provided by providing one or more data channel applications to real-time communication service participants.

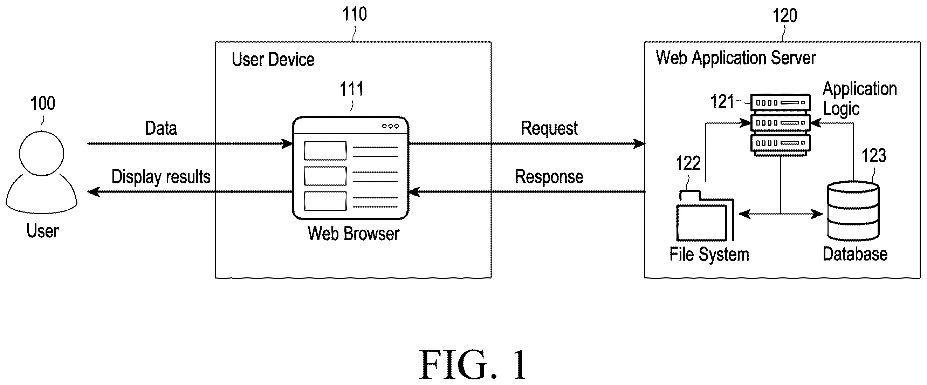

### [Web Application - FIG. 1]

FIG. 1 illustrates an example of a web application providing structure according to various embodiments of the disclosure.

Referring to FIG. 1, a user 100 may consume a web application by using a user device (e.g., a user terminal) 110. A web browser 111 running on the user device 110 may perform a presentation function of the web application. For example, the web browser 111 may receive data from the user 100, and may provide a result of processing the user data to the user 100 by rendering the same on a display device. Information for web application presentation of the web browser 111 may include hypertext markup language (HTML), cascading style sheet (CSS), and JavaScript, and may be downloaded from a web application server 120 by request through a hypertext transfer protocol (HTTP) uniform resource locator (URL). When HTML provides the structure of the web application and CSS controls an appearance of the web application displayed to the user, a programming language of JavaScript may provide a tool for changing the operation of various components included in the web application.

Processing the user data may be, for example, a procedure in which the web browser 111 transmits a request for data processing to the web application server 120 and receives a response to the data processing from the web application server 120. The web application server 120 may include application logic 121, a file management system 122, and a database 123 for processing the user data.

The HTTP URL is an identifier that describes a location where a resource, such as a document, an image, and a video, is stored on a specific server. The HTTP URL may have the following structure.

### <scheme>:/ /<username>:<password>@<host>:<port>/<path>?<query>#<frag ment>

- Scheme: The scheme refers to a protocol to use, and uses http or https.
- Username and Password: The server may request the username and the password to access data.
- Host and Port: The host refers to an IP or domain address of the web application server where a resource is located, and the port is information for identifying each socket when the host communicates data through a plurality of sockets. In HTTP, when a port number is not specified, port 80 is used as a default.
- Path: The path refers to a path of a resource provided by the host.
- Query: The query is also called a query string, and may include a parameter needed when the web browser requests a resource.
- Fragment: HTML may assign an id attribute to each component, and when the fragment is passed to the URL, a scroll of the web browser moves to a location where a corresponding id is.

For example, http://www.example.com/test.html indicates a location of a resource "test.html" obtainable from a web application server of a domain "www.example.com" by using HTTP.

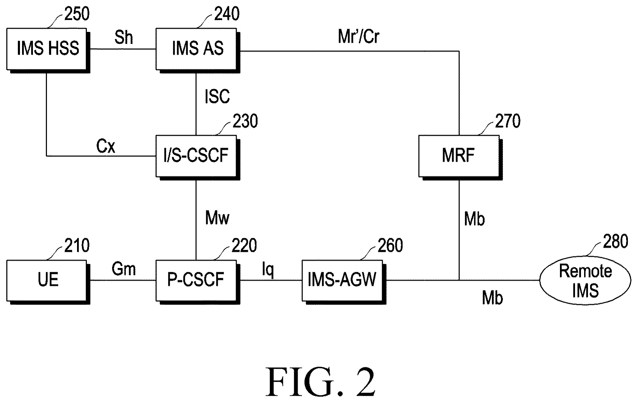

### [Internet Protocol Multimedia Subsystem (IMS) Structure - FIG. 2]

FIG. 2 illustrates an Internet protocol multimedia subsystem (IMS) network architecture according to various embodiments of the disclosure.

Referring to FIG. 2, a user equipment (UE) 210 may communicate with another UE (not shown) and an IP multimedia core network (IM CN) subsystem component located in a remote IMS network 280 through an IM CN subsystem. The IM CN subsystem may include a P-CSCF 220, an I/S-CSCF 230, an IMS AS 240, an IMS HSS 250, an IMS AGW 260, and/or an MRF 270. The foregoing components may perform the following functions.
- Proxy call session control function (P-CSCF) 220: The P-CSCF may function as a first contact point for the UE to access an IMS.
- Interrogating/serving CSCF (I/S-CSCF) 230: The I-CSCF may function as a contact point for a subscriber of a network provider or a roaming user currently located in a service area of the network provider. The S-CSCF may handle an actual user session state of the network.
- IMS application server (AS) 240: The IMS AS may provide and execute an Internet multimedia (IM) value-added service. The IMS AS may affect a session initiation protocol (SIP) session by acting as an agent for a service supported in the operator network.
- IMS home subscriber server (HSS) 250: The IMS HSS may act as a database that stores information about a user.
- IMS-access gateway (AGW) 260: The IMS-AGW may be located in a media transmission path to manage a network address associated with inbound and outbound media streams.
- Media resource function (MRF) 270: The MRF may perform various processing operations related to a media stream. The MRF may be divided into a multimedia resource function controller (MRFC) responsible for control and a multimedia resource function processor (MRFP) responsible for media processing.

Referring to FIG. 2, interfaces between the components may be expressed as the following reference points.
- Gm: Reference point Gm may support communication between the UE and the IM CN subsystem. For example, the UE may request network registration and session control through reference point Gm. SIP, which will be described later, may be used for reference point Gm.
- Mw: Reference point Mw may support exchange and transmission of a signaling message between CSCFs.
- ISC: Reference point ISC may support exchange of information required for a service provided by a service platform (e.g., the IMS AS) between the S-CSCF and the service platform.
- Sh: Reference point Sh may support exchange of information required for a service provided by the service platform (e.g., the IMS AS) between the HSS and the service platform.
- Cx: Reference point Cx may support transmission of information between the HSS and the CSCF.
- Mr'/Cr: Reference point Mr' may support an interaction for session control between the IMS AS and the MRFC, and reference point Cr may support an interaction for media control between the IMS AS and the MRFC.
- Iq: Reference point Iq may support exchange of information required for allocation and release of a transport address between the P-CSCF and the IMS AGW.
- Mb: Reference point Mb may support IMS media transmission between IMS components.

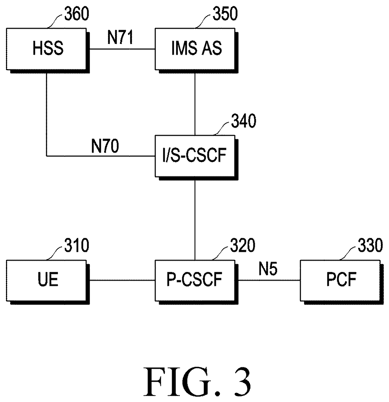

### [IMS/5G architecture - FIG. 3]

A wireless communication system according to various embodiments of the disclosure may be, for example, a 5G system (5GS). The 5GS may include a 5G radio access network (next-generation radio access network: NG-RAN) and a 5G core network (5GC). The 5GS interworks with existing LTE, and may also be connected to a non-3GPP radio access technology, such as Wi-Fi. The 5GC is located between the NG-RAN and an external packet data network (Public Data Network: PDN), and may provide various types of data services including a voice for a user. Control-plane components of the 5GC may be considered as virtualized network functions (VNFs), and communication between the VNFs may be considered as one VNF providing a service to other VNFs through a RESTful-based application programming interface (API) exchange. An API-based communication interface between the VNFs is referred to as a service-based interface (SBI).

FIG. 3 illustrates an example of an interaction between an IMS and a 5GC according to various embodiments of the disclosure.

Referring to FIG. 3, a P-CSCF 320 supporting an SBI may communicate with a policy control function (PCF) 330, which may be represented by reference point N5. The PCF 330 may support policy establishment and distribution for managing a network operation, and the P-CSCF 320 supporting the SBI may be considered as an application function (AF) using a service that the PCF 330 provides for other VNFs.

An HSS 360 supporting an SBI may communicate with an I/S-CSCF 340 supporting an SBI through reference point N70, and may communicate with an IMS AS 350 supporting an SBI through reference point N71. Likewise, the I/S-CSCF 340 supporting the SBI and the IMS AS 350 supporting the SBI may be considered as AFs using a service provided by the HSS 360 supporting the SBI, and functions provided via reference points N70 and N71 may be equivalent to functions provided via reference points Cx and Sh, respectively.

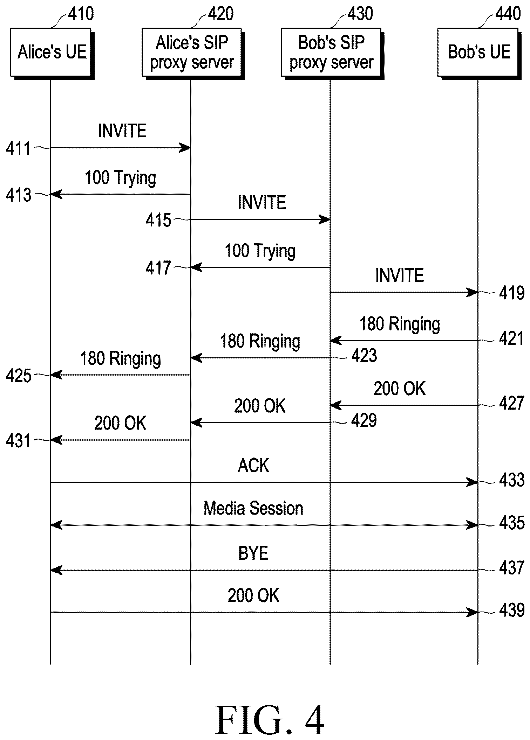

### [SIP - FIG. 4]

A SIP is an application layer signaling protocol that specifies a procedure for intelligent UEs that want to communicate on the Internet to identify each other to find locations thereof and generate or delete/change a multimedia communication session therebetween. The SIP is a request/response structure that controls generation, modification, and termination of a multimedia service session including an Internet-based conference, a call, a voice mail, an event notification, and instant messaging, may be used for both a TCP and a user datagram protocol (UDP), and provides a service regardless of an IP address by using a SIP URL, which is similar to an email address, to distinguish each user. The SIP is a text-based protocol developed by incorporating many elements of HTTP and SMTP, thus being easy to implement, and has flexibility and extensibility to generate various services in combination with a large number of other protocols used on the Internet. The SIP is a simpler protocol corresponding to ITU-T H.323, and was proposed as RFC 2543 by the Multiparty Multimedia Session Control (MMUSIC) working group of the IETF in 1999 and then revised by a separate IETF SIP working group to establish RFC3261 in July 2002.

FIG. 4 illustrates a SIP operation procedure in a mobile communication system according to various embodiments of the disclosure.

Referring to FIG. 4, user Alice makes a call to Bob's UE 440 (e.g., a SIP UE) by using a UE 410 thereof (e.g., a SIP UE), and the following communication procedure may be performed between a proxy server (SIP proxy server) 420 of Alice (e.g., the originating UE 410) and a proxy server (SIP proxy server) 430 of user Bob (e.g., the terminating UE 440) to establish a call session.
- Operation 411: Alice's UE 410 transmits a SIP INVITE request including a session description protocol (SDP) offer, which will be described later, to Alice's proxy server 420. The SIP INVITE may include a SIP URI of an originator (e.g., Alice), a SIP URI of a receiver (e.g., Bob), and information for establishing a call session.
- Operation 413: Alice's proxy server 420 receives the SIP INVITE request transmitted in operation 411, and transmits a 100 Trying response to Alice's UE 410. The 100 Trying response means that the INVITE has been received and that Alice's proxy server 420 is operating to transmit the INVITE request to the receiver (Bob) (e.g., the terminating UE 440).
- Operation 415: Alice's proxy server 420 identifies a network address of Bob's proxy server 430 using a method, such as a domain name service (DNS), and transmits the SIP INVITE to Bob's proxy server 430. In an embodiment, Alice's proxy server 420 may add a network address of Alice's proxy server 420 to a Via header field of the SIP INVITE to be transmitted to Bob's proxy server 430.
- Operation 417: Bob's proxy server 430 receives the SIP INVITE, and transmits 100 Trying to Alice's proxy server 420 to report that Bob's proxy server 430 has received the SIP INVITE and is processing the request.
- Operation 419: Bob's proxy server 430 identifies a network address of Bob's UE 440 by using a database, and transmits the SIP INVITE to Bob's UE 440. In an embodiment, Bob's proxy server 430 may add the network address of Bob's proxy server 430 to the Via header field of the SIP INVITE to be transmitted to Bob's UE 440.
- Operation 421: Bob's UE 440 receives the INVITE, and informs Bob that a call request has arrived from Alice through a sound, a vibration, a screen, or the like. Bob's UE 440 informs Bob's proxy server 430 that the operation is being performed with a 180 Ringing response. In an embodiment, the network address of Bob's proxy server 430 may be identified based on information added to the Via header field in operation 419.
- Operation 423: Bob's proxy server 430 transmits the received 180 Ringing response to Alice's proxy server 420. The network address of Alice's proxy server 430 may be identified based on information added to the Via header field in operation 415.
- Operation 425: Alice's proxy server 420 transmits the received 180 Ringing response to Alice's UE 410. Upon receiving the 180 Ringing response, Alice's UE 410 may inform Alice of the response through a ring-back tone.
- Operation 427: When Bob determines to receive the call, Bob's UE 440 reports that the call has been answered through a 200 OK response including an SDF answer, which will be described later. As a result, an SDP is forwarded from Alice's UE 410 to Bob's UE 440, and then forwarded from Bob's UE 440 to Alice's UE 410, which corresponds to a media capability negotiation using an SDP offer/answer to be described later. The 200 OK response may include a network address for direct communication with Bob's UE 440 in a Contact header field.
- Operation 429: Bob's proxy server 430 forwards the received 200 OK response to Alice's proxy server 420. In an embodiment, the network address of Alice's proxy server 430 may be identified based on the information added to the Via header field in operation 415.
- Operation 431: Alice's proxy server 420 transmits the received 200 OK response to Alice's UE 410. Upon receiving the 200 OK response, Alice's UE 410 may stop the ring-back tone and inform Alice that the call has been answered.
- Operation 433: Alice's UE 410 transmits an ACK message indicating that the final response (200 OK) has been received to Bob's UE 440. The ACK message may be transmitted to Bob's UE 440 without going through Alice's proxy server 420 and Bob's proxy server 430 by using the network address of Bob's UE 440 included in the Contact header field in operation 427.
- Operation 435: A handshake procedure including INVITE/200/ACK is completed, and a media session is started. Alice or Bob may change a characteristic of the media session during the media session, and accordingly a re-INVITE/200/ACK handshake including an SDP offer reflecting the changed characteristic of the media session may be performed.
- Operation 437: When Bob terminates the call first, Bob's UE 440 transmits a BYE message to Alice's UE 410.
- Operation 439: Upon receiving the BYE message Alice's UE transmits a 200 OK response indicating that the BYE message has been received, and the call session is terminated.

### [Session Description Protocol (SDP)]

Hereinafter, an example of a session description protocol (SDP) included in a SIP message is described. For example, the SDP included in the SIP message of operation 411 and operation 427 of FIG. 4 is described as an example. The SDP is an ASCII text-based protocol for describing a multimedia session and related schedule information. The SDP conveys information about a media stream of a multimedia session to join a session, the multimedia session is defined as a set of media streams for duration, and time during which the session is active does not need to be continuous. A multicast-based session on the Internet serves two primary purposes: a tool to indicate existence and time of a session and a tool to convey session joining information, and in a unicast environment, the latter purpose is relevant. SDP information may include a name and purpose of a session, time when the session is active, media including the session, and media reception information.

An SDP description is formatted as a document, and may include a session-level section and following zero or more media descriptions. An example of the SDP description is illustrated in Table 1.

**[Table 1]**

| |
|---|
| v=0 |
| o=alice 2819384758 2819384758 IN IP4 198.51.100.1 |
| s=Call to Bob |
| c=IN IP4 198.51.100.1 |
| t=0 0 |
| m=audio 49170 RTP/AVP 0 |
| m=video 51372 RTP/AVP 99 |

In the example illustrated in Table 1, the SDP description includes a session-level section including a "v=" line, an "o=" line, an "s=" line, an "s=" line, and a "t=" line, and two media descriptions ("m=" lines). The meaning of each line in the SDP description is as follows:
- "v=" line (version-field): A line indicating the version of the SDP. The "v=" line in Table 1 means that the version of the SDP is 0.
- "o=" line: (origin-field): A line indicating an originator. The "o=" line may include a user name (Username), a session identifier (sess-id), a session version (sess-version), a network type (nettype), a network address type (addtype), and a network address of a session initiator (unicast-address) in order. The "o=" line in Table 1 means that Alice initiates a session with an identifier of 2819384758 and a version of 2819384758 at an IP4 address of an IN (internet) network of 198.51.100.1.
- "s=" line (session-name-field): A line indicating the name of a session including characters. The "s=" line in Table 1 means that the name of a session is "Call to Bob."
- "c=" line (connection-field): Information required to establish a network connection. The "c=" line may include a network type (nettype), a network address type (addtype), and a network address (connection-address) in order. The "c=" line in Table 1 means that a network connection is established with the IP4 address of the IN (internet) network of 198.51.100.1. When establishing a media session with a different IP address, the "c=" line may be configured in the unit of a media descriptions ("m=" lines).
- "t=" line (time-field): A line indicating the start and end times of a session. The "t=" line in Table 1 means a permanent session.
- "m=" line (media-field): A single media description starts with an "m=" line and ends with the next "m=" line or at the end of the SDP description, and may include additional attributes. The "m=" line may include a media type (e.g., "media"), a transmission port number (e.g., "port"), a transmission protocol identifier (e.g., "proto"), and/or a media format description (e.g., "fmt") in order. A first "m=" line in Table 1 means that audio information (e.g., "audio") is transmitted via an RTP/AVP protocol through port 49170 and a media format (e.g., "0") is indicated as an additional attribute, and a second "m=" line means that video information (e.g., "video") is transmitted via the RTP/AVP protocol through port 51372 and a media format (e.g., "99") is indicated as an additional attribute. The RTP/AVP denotes an audio/video profile of a real-time transport protocol (RTP).

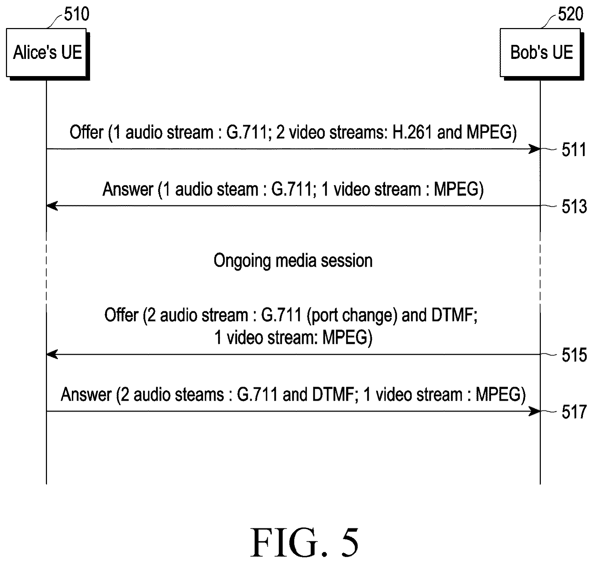

### [SDP Negotiation - FIG. 5]

To provide a service (e.g., a real-time interaction service) in a communication system according to various embodiments of the disclosure, users (e.g., UEs) participating in the service may conduct a negotiation for a media session forming the service. The communication system according to various embodiments of the disclosure may perform a negotiation for the media session through an SDP negotiation in order to provide the service (e.g., the real-time interaction service). Hereinafter, various embodiments of the disclosure will be described assuming that the service provided by the communication system is a real-time interaction service, but the service is not limited thereto.

FIG. 5 illustrates an SDP negotiation procedure for a real-time interaction service in a communication system according to various embodiments of the disclosure. It should be noted that FIG. 5 only considers an SDP exchange procedure and does not include the foregoing SIP operation procedure.

Referring to FIG. 5, an SDP negotiation for a real-time interaction service in the communication system according to various embodiments of the disclosure may be performed according to the following procedure.
- Operation 511: Alice's UE 510 (e.g., an originating UE) transmits an SDP offer to Bob's UE 520 (e.g., a terminating UE). Table 2 shows an example of the SDP offer. Referring to Table 2, Alice (e.g., the originating UE 510) offers media descriptions for the following three media streams.
   ■ Audio stream 1: UDP port 49170, G.711 ulaw codec (G.711)
   ■ Video stream 1: UDP port 51372, H.261 codec (e.g., payload type 31)
   ■ Video stream 2: UDP port 53000, MPEG codec (e.g., payload type 32)

**[Table 2]**

| |
|---|
| v=0 |
| o=alice 2890844526 2890844526 IN IP4 host.anywhere.com |
| s= |
| c=IN IP4 host.anywhere.com |
| t=0 0 |
| m=audio 49170 RTP/AVP 0 |
| a=rtpmap:0 PCMU/8000 |
| m=video 51372 RTP/AVP 31 |
| a=rtpmap:31 H261/90000 |
| m=video 53000 RTP/AVP 32 |
| a=rtpmap:32 MPV/90000 |

- Operation 513: Bob's UE 520 (e.g., the terminating UE) generates an answer (SDP Answer) to the SDP offer, and transmits the answer to Alice's UE 510. Table 3 shows an example of the SDP answer. Referring to Table 3, Bob (e.g., the terminating UE 520) accepts media descriptions for the following three media streams.
   ■ Audio stream 1: UDP port 49920, G.711 ulaw codec (G.711)
   ■ Video stream 1: Not want to open video stream using H.261 codec (e.g., a UDP port configured to 0 and a media attribute ("a=" line) not defined)
   ■ Video stream 2: UDP port 53000, MPEG codec (payload type 32)

**[Table 3]**

| |
|---|
| v=0 |
| o=bob 2890844730 2890844730 IN IP4 host.example.com |
| s= |
| c=IN IP4 host.example.com |
| t=0 0 |
| m=audio 49920 RTP/AVP 0 |
| a=rtpmap:0 PCMU/8000 |
| m=video 0 RTP/AVP 31 |
| m=video 53000 RTP/AVP 32 |
| a=rtpmap:32 MPV/90000 |

- Operation 515: During a call session, Bob's UE 520 changes the UDP port number for receiving an audio from 49920 to 65422, and adds a separate receive-only audio stream for receiving an event. Bob's UE 520 generates an SDP offer reflecting the foregoing content, and transmits the offer to Alice's UE 510. Table 4 shows an example of the SDP offer. Referring to Table 4, Bob (e.g., the terminating UE 520 offers media descriptions for the following four media streams.
   ■ Audio stream 1: Change UDP port 49920 to 65422, G.711 ulaw codec (G.711)
   ■ Video stream 1: Not want to open video stream using H.261 codec (e.g., UDP port configured to 0 and media attribute ("a=" line) not defined)
   ■ Video stream 2: UDP port 53000, MPEG codec (payload type 32)
   ■ Audio stream 2: UDP port 51434, Dual-tone multiple frequency (DTMF) event (payload type 110), Receive-only

**[Table 4]**

| |
|---|
| v=0 |
| o=bob 2890844730 2890844731 IN IP4 host.example.com |
| s= |
| c=IN IP4 host.example.com |
| t=0 0 |
| m=audio 65422 RTP/AVP 0 |
| a=rtpmap:0 PCMU/8000 |
| m=video 0 RTP/AVP 31 |
| m=video 53000 RTP/AVP 32 |
| a=rtpmap:32 MPV/90000 |
| m=audio 51434 RTP/AVP 110 |
| a=rtpmap:110 telephone-events/8000 |
| a=recvonly |

- Operation 517: Alice's UE 510 generates an answer to the SDP offer, and transmits the answer to Bob's UE 520. Table 5 shows an example of the SDP answer. Referring to Table 5, Alice (e.g., the originating UE 510) accepts media descriptions for the following four media streams.
   ■ Audio stream 1: UDP port 49170, G.711 ulaw codec (G.711)
   ■ Video stream 1: Not open video stream using H.261 codec (e.g., UDP port configured to 0)
   ■ Video stream 2: UDP port 53000, MPEG codec (e.g., payload type 32)
   ■ Audio stream 2: UDP port 53122, Dual-tone multiple frequency (DTMF) event (e.g., payload type 110), Send-only

**[Table 5]**

| |
|---|
| v=0 |
| o=alice 2890844526 2890844527 IN IP4 host.anywhere.com |
| s= |
| c=IN IP4 host.anywhere.com |
| t=0 0 |
| m=audio 49170 RTP/AVP 0 |
| a=rtpmap:0 PCMU/8000 |
| m=video 0 RTP/AVP 31 |
| a=rtpmap:31 H261/90000 |
| m=video 53000 RTP/AVP 32 |
| a=rtpmap:32 MPV/90000 |
| m=audio 53122 RTP/AVP 110 |
| a=rtpmap:110 telephone-events/8000 |
| a=sendonly |

### [IMS DCA]

In a communication system according to various embodiments of the disclosure, a web application for providing a service (e.g., a real-time interaction service) may be provided from a data channel server (DCS). The data channel server may be located in an IMS operator network or a third-party network. In the disclosure, the web application provided by the data channel server may be referred to as a data channel application (DCA). A UE participating in the service (e.g., the real-time interaction service) provided by the data channel application may exchange data required by the service with another UE participating in the same service directly or through an intermediate node by using a data channel (DC), and may communicate with the data channel server by using a bootstrap data channel (BDC).

In a communication system according to various embodiments of the disclosure, a data channel application may be identified by an application identifier, such as an HTTP URL or a URI having a prearranged format. When using the HTTP URL, the data channel application may include a <host> part configuring the HTTP URL, and may omit a <path> part.

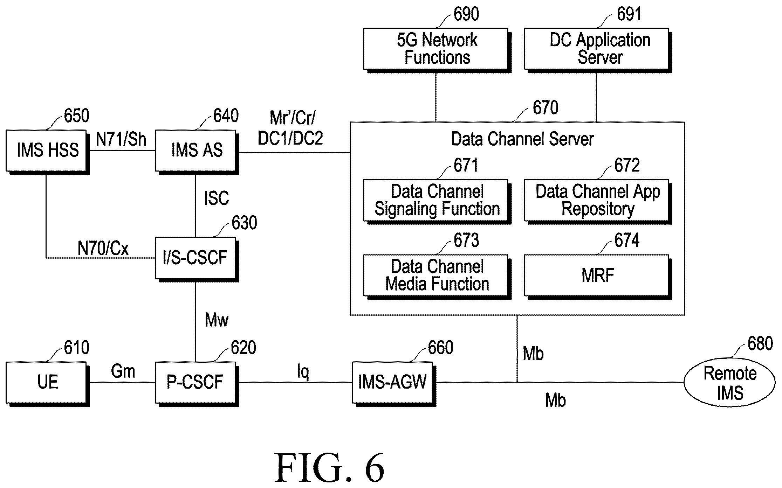

### [IMS DCS - FIG. 6]

FIG. 6 illustrates a network structure including a data channel server in a communication system according to various embodiments of the disclosure.

Referring to FIG. 6, the communication system may include a UE 610 and an IM CN subsystem. The UE 610 may communicate with another UE located in a remote IMS network 680 and components of the IM CN subsystem through the IM CN subsystem. The IM CN subsystem may include a P-CSCF 620, an I/S-CSCF 630, an IMS AS 640, an IMS HSS 650, an IMS AGW 660, and/or a data channel server 670. A description of the UE 610, the P-CSCF 620, the I/S-CSCF 630, the IMS AS 640, the IMS HSS 650, and the IMS AGW 660 of the communication system of FIG. 6 may refer to, for example, a description of the UEs 210 and 310, the P-CSCFs 220 and 320, the I/S-CSCFs 230 and 340, the IMS ASs 240 and 350, the IMS HSSs 250 and 360, the IMS AGWs 260, and/or the MRF 270 of FIG. 2/3, and a redundant description may be omitted.

The data channel server 670 may include a data channel signaling function 671, a data channel application repository 672, a data channel media function 673, and/or an MRF 674.

The data channel signaling function 671 may perform at least one of the following functions:
- Management and control of a data channel including a bootstrap data channel;
- Management of a data channel and generation/reception of an event through communication with an IMS AS;
- Management and distribution control of a data channel application;
- Communication with a 5G network function 690 for providing a data channel application service; and/or
- Serving as a proxy for resource distribution of a data channel application server 691

The data application repository 672 may store and manage a data channel application, and may be located inside or outside the data channel server 670.

The data channel media function 673 and the MRF 674 may perform at least one of the following operations:
- Management and control of a media resource to be transmitted through a data channel including a bootstrap data channel; and/or
- Serving as a proxy for a data exchange between an end point of a data channel connected to the UE and another end point

The data channel media function 673 and the MRF 674 provide equivalent functions with different interfaces, and an operator may include only one of the data channel media function 673 and the MRF 674 in the data channel server 670 or both thereof considering compatibility with other network devices and user terminals.

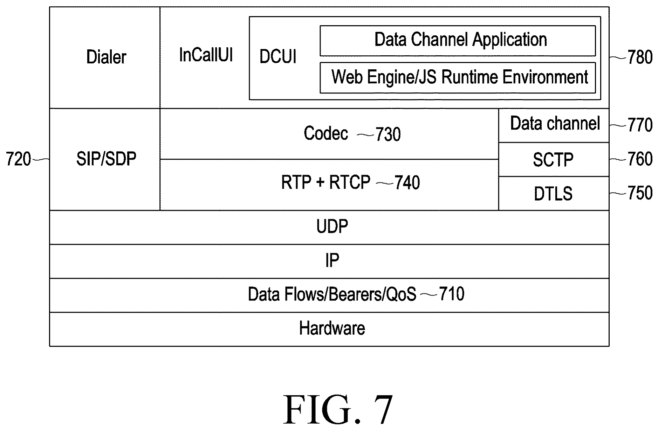

### [Protocol Stack - FIG. 7]

FIG. 7 illustrates a UE protocol stack supporting a data channel application in a communication system according to various embodiments of the disclosure.

Referring to FIG. 7, a data flows/bearers/QoS layer 710 may support a packet processing rule, for example, according to 3GPP TS 26.114. An SIP/SDP layer 720 may perform media parameter negotiation and session control using the foregoing SIP/SDP. Media data, such as a video, speech, a still image, and text, may be encoded in a codec layer 730 and transmitted as a real-time transport protocol (RTP) 740 packet, and an RTP control protocol (RTCP) 740 may be used for RTP session control and reception environment reporting.

A datagram transport layer security (DTLS) layer 750 may initiate DTLS session establishment between a user terminal and an IMS network or between user terminals, and a DTLS session may provide security for stream control transmission protocol (SCTP) data transmission. An SCTP layer 760 may initiate transmission session establishment including an SCTP association between a user terminal and an IMS network or between user terminals. One SCTP association may include one or more data channels, and each data channel may be identified by a stream identifier (stream ID) provided by an SCTP.

A data channel layer 770 may manage the DTLS layer 750 and the SCTP layer 760 in an integrated manner, and may provide a JavaScript API that allows a data channel application to establish a data channel and use the established data channel for an application data exchange. An InCallUI layer 780 may manage a display and an input device of a user terminal during a call, and a DCUI may collectively refer to a function of the user terminal for supporting a data channel. For example, in an Android system, the DUCI may display HTML content forming a data channel application on a screen through a native web engine WebView, and may execute a JavaScript code. The DCUI may obtain a data channel application with a bootstrap data channel via interworking with a data channel server using an API provided by the data channel layer 770, and may perform additional data channel establishment for the data channel application.

According to an embodiment of the disclosure, there is provided a UE in a wireless communication system, and the UE includes a transceiver and at least one processor connected to the transceiver, wherein the at least one processor is configured to: transmit, to a network entity through the transceiver, a first message including a session description protocol (SDP) offer including a data channel stream identifier of at least one bootstrap data channel and a first attribute related to mapping information between the data channel stream identifier of the at least one bootstrap data channel and a data channel application provider; and receive, from the network entity through the transceiver, a second message including an SDP answer corresponding to the SDP offer, and the SDP answer includes access information about the network entity and the first attribute.

According to an embodiment of the disclosure, the first attribute includes information about a reference UE in which mapping information between the data channel stream identifier of the at least one bootstrap data channel and the data channel application provider is described.

According to an embodiment of the disclosure, the reference UE includes one of a UE transmitting the SDP offer or a UE transmitting the SDP answer.

According to an embodiment of the disclosure, the first attribute is configured to one of a first value indicating that the data channel stream identifier of the at least one bootstrap data channel is described based on the UE transmitting the SDP offer or a second value indicating that the data channel stream identifier of the at least one bootstrap data channel is described based on the UE transmitting the SDP answer.

According to an embodiment of the disclosure, the UE includes a data channel-capable multimedia telephony service for Internet protocol multimedia subsystem (MTSI) client in a local operator network of the wireless communication system, and the network entity includes a local Internet protocol multimedia subsystem (IMS) application server (AS) or a data channel server (DCS) of the wireless communication system.

According to an embodiment of the disclosure, there is provided a network entity in a wireless communication system, and the network entity includes a transceiver and at least one processor connected to the transceiver, wherein the at least one processor is configured to: receive, from a UE through the transceiver, a first message including a session description protocol (SDP) offer including a data channel stream identifier of at least one bootstrap data channel and a first attribute related to mapping information between the data channel stream identifier of the at least one bootstrap data channel and a data channel application provider; and transmit, to the UE through the transceiver, a second message including an SDP answer corresponding to the SDP offer, and the SDP answer includes access information about the network entity and the first attribute.

According to an embodiment of the disclosure, the first attribute includes information about a reference UE in which mapping information between the data channel stream identifier of the at least one bootstrap data channel and the data channel application provider is described.

According to an embodiment of the disclosure, the reference UE includes one of a UE transmitting the SDP offer or a UE transmitting the SDP answer.

According to an embodiment of the disclosure, the first attribute is configured to one of a first value indicating that the data channel stream identifier of the at least one bootstrap data channel is described based on the UE transmitting the SDP offer or a second value indicating that the data channel stream identifier of the at least one bootstrap data channel is described based on the UE transmitting the SDP answer.

According to an embodiment of the disclosure, the UE includes a data channel-capable multimedia telephony service for Internet protocol multimedia subsystem (MTSI) client in a local operator network of the wireless communication system, and the network entity includes a local Internet protocol multimedia subsystem (IMS) application server (AS) or a data channel server (DCS) of the wireless communication system.

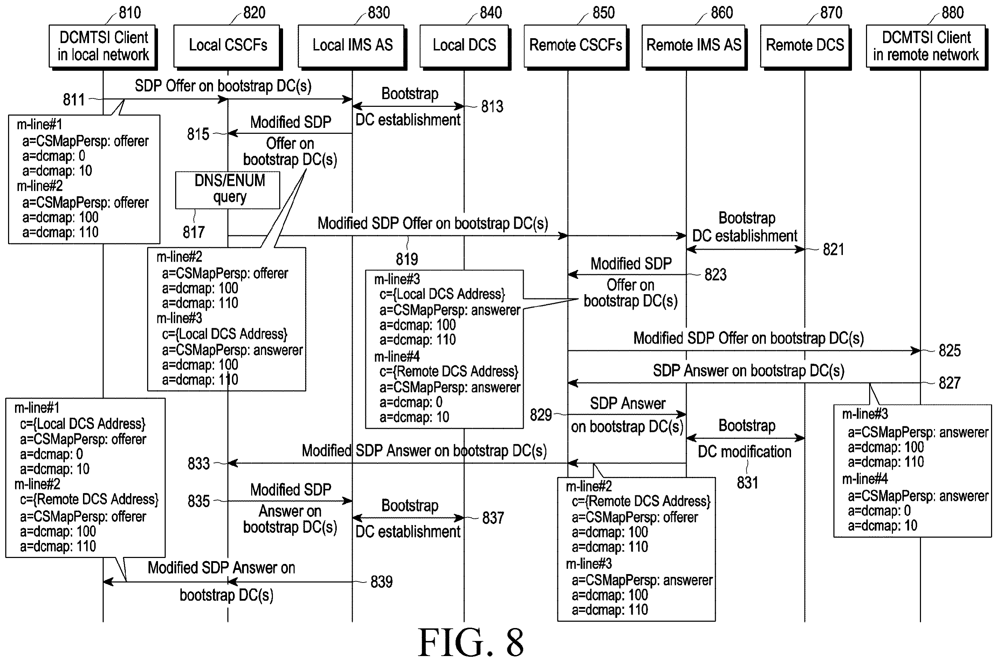

### [Bootstrap Data Channel Establishment Procedure - FIG. 8]

FIG. 8 illustrates a bootstrap data channel establishment procedure in a communication system according to various embodiments of the disclosure.

Referring to FIG. 8, in the communication system according to an embodiment of the disclosure, a data channel stream identifier of a bootstrap data channel may be mapped to a data channel application provider. For example, data channel stream identifier "0" may be mapped to a network provider (originating network, e.g., a local network provider) in which a user terminal (originating UE, e.g., the UE 610 of FIG. 6) is registered, data channel stream identifier "10" may be mapped to a subscriber (e.g., a local user who is a local network user) to the network provider in which the user terminal is registered, data channel stream identifier "100" may be mapped to a remote network provider (terminating network, e.g., the remote IMS 680), and data channel stream identifier "110" may be mapped to a subscriber (e.g., a remote user who is a remote network user) to the remote network provider.

The foregoing mapping may be described based on one UE (e.g., a user terminal). The UE as a reference for describing the mapping is referred to as a "reference UE," and information about the reference UE may be signaled through an a=CSMapPersp attribute of an SDP according to an embodiment of the disclosure. Although embodiments of the disclosure illustrate a case in which the information about the reference UE is signaled through the a=CSMapPersp attribute for illustration, the information about the reference UE may be signaled not only through the a=CSMapPersp attribute but also through other attributes (or information), and a form in which the information about the reference UE is signaled may not be particularly limited.

Referring to FIG. 8, UEs (e.g., a first user terminal 810 and a second user terminal 880) may obtain a data channel application through the following procedure.
- Operation 811: The first user terminal 810 (originating UE, e.g., a DCMTSI client in a local network) transmits a SIP INVITE request message including an SDP offer to a local IMS AS 830 (e.g., a network entity in an originating network), which is an IMS AS of a local network provider, via local CSCFs 820, which are CSCFs of the local network provider to which the first user terminal 810 subscribes. In an embodiment, DCMTSI refers to a data channel-capable MTSI that supports data channel media, and MTSI refers to a multimedia telephony service for IMS. In FIG. 8, the first user terminal 810 is expressed as "DCMTSI client in local network", the local CSCFs are expressed as "Local CSCFs", and the local IMS AS is expressed as "Local IMS AS". Operation 811 is expressed as "SDP Offer on bootstrap DC(s)."

For example, the SDP offer may include at least one media description ("m=" line) for establishing a bootstrap data channel (e.g., a bootstrap data channel media description) as illustrated in Table 6.

**[Table 6]**

| |
|---|
| m=application 52718 UDP/DTLS/SCTP webrtc-datachannel |
| b=AS:500 |
| a=max-message-size:1024 |
| a=sctp-port:5000 |
| a=setup: actpass |
| a=fingerprint:SHA-1 |
| 4A:AD:B9:B1:3F:82:18:3B:54:02:12:DF:3E:5D:49:6B:19:E5:7C:AB |
| a=tls-id: abc3de65cddef001be82 |
| a=CSMapPersp: offerer |
| a=dcmap:0 subprotocol="http" |
| a=dcmap:10 subprotocol="http" |
| m=application 52720 UDP/DTLS/SCTP webrtc-datachannel |
| b=AS:500 |
| a=max-message-size:1024 |
| a=sctp-port:5000 |
| a=setup: actpass |
| a=fingerprint:SHA-1 |
| AB:3D:14:32:AF:3:18:3A:52:02:DF:DE:AB:5D:49:6B:19:E5:CD:3A |
| a=tls-id: b1c3afd3cddeg10af3fa1 |
| a=CSMapPersp: offerer |
| a=dcmap:100 subprotocol="http" |
| a=dcmap:110 subprotocol="http" |

Among attributes included in Table 6, a "b=" line (e.g., a bandwidth field) denotes the bandwidth of a data channel, and an "a=max-message-size:" attribute, an "a=sctp-port:" attribute, an "a=setup:" attribute, an "a=fingerprint:" attribute, and an "a=tls-id" attribute are attributes for configuring a user datagram protocol (UDP)/datagram transport layer security (DTLS)/stream control transmission protocol (SCTP). An "a=dcmap:" attribute is an attribute for configuring a data channel-related parameter, and may include a data channel stream identifier (dcmap-stream-id) and an application layer protocol (subprotocol) to be transmitted via a data channel.

The data channel stream identifier of the bootstrap data channel may be mapped to a data channel application provider. The media descriptions in Table 6 offer four possible data channel application providers. In an embodiment, a first media description is an offer for establishing a bootstrap data channel with a local data channel server 840, which is a data channel server of the local network provider, and a second media description is an offer for establishing a bootstrap data channel with a remote data channel server 870, which is a data channel server of a remote network provider. In FIG. 8, the local data channel server is expressed as "Local DCS," and the remote data channel server is expressed as "Remote DCS."

In the communication system according to an embodiment of the disclosure, a user terminal (e.g., the first user terminal 810) participating in a service (e.g., a real-time interaction service) may further include an "a=CSMapPersp:" attribute, which will be described later, in the SDP offer for establishing the bootstrap data channel. In an embodiment, the "a=CSMapPersp:" parameter may have an "offerer" value or an "answer" value as an attribute value, and the "offerer" value may mean that a data channel stream identifier of an "a=dcmap:" attribute relating to the bootstrap data channel included in the media description including "a=CSMapPersp:" is written based on the user terminal transmitting the SDP offer (originating UE, e.g., the first user terminal 810), and the "answerer" value may mean that the data channel stream identifier is written based on a user terminal to transmit an answer (terminating UE, e.g., the second user terminal 880) (e.g., a DCMTSI client in a remote network). In FIG. 8, the second user terminal 880 is expressed as "DCMTSI client in a remote network."
- Operation 813: Upon receiving the SIP INVITE request message, the local IMS AS 830 analyzes the bootstrap data channel media descriptions of the SDP offer, and open a bootstrap data channel and allocate a resource for distributing a data channel application by communicating with the local DCS 840, which is the data channel server (DCS) of the local network provider. In FIG. 8, operation 813 is expressed as "Bootstrap DC establishment." For example, according to an operator policy, the local IMS AS 830 may limit a data channel application initially provided for a call session to an application (e.g., a stream identifier (or data channel stream identifier) 0" or "100") provided by the network provider.
- Operation 815: The local IMS AS 830 transmits the SIP INVITE request message including the SDP offer to the local CSCFs 820. The SDP offer may be modified by the local IMS AS 830, and in FIG. 8, operation 815 is expressed as "Modified SDP Offer on bootstrap DC(s)." In an embodiment, a modification of the SDP offer (or modified SDP offer) may include the operator policy described above or a resource allocation result of the local DCS 840. In an embodiment of the disclosure, the local IMS AS 830 may remove a first media description describing a bootstrap data channel between the first user terminal 810 and the local DCS 840 from the SDP offer, and may add a third media description including access information about the local DCS 840 for establishing a bootstrap data channel between the local DCS 840 and the second user terminal 880. In an embodiment, an "a=CSMapPersp:" parameter included in the third media description may have an "answerer" value as an attribute value.

In an embodiment of the disclosure, the local IMS AS 830 may add attribute information (e.g., "a=CSMapPersp:") having an "answerer" value (e.g., a "receiver" value) to a first media description and/or add attribute information (e.g., "a=CSMapPersp:") having an "offerer" value (e.g., a "sender" value) to a second media description so that a terminating network (e.g., the remote IMS AS 860) may distinguish between two media descriptions (e.g., the first media description and the second media description) corresponding to two bootstrap data channels with the first user terminal 810 and the second user terminal 880. The first media description to which the attribute information is added may be referred to as a third media description.
- Operation 817: The local CSCFs 820 identify a network which the second user terminal 880 joins, and retrieve CSCFs to which the local CSCFs transmits the SIP INVITE request message including the modified SDP offer. In FIG. 8, operation 817 is expressed as "DNS/ENUM query." In an embodiment of the disclosure, it is assumed that the second user terminal 880 is located in a remote network in which a call is possible through remote CSCFs 850, which are CSCFs of a remote network provider. In FIG. 8, the remote CSCFs are expressed as "Remote CSCFs."
- Operation 819: The SIP INVITE request message including the modified SDP offer transmitted by the local CSCFs 820 is transmitted to a remote IMS AS 860 (e.g., a network entity of the terminating network), which is an IMS AS of the remote network provider, through the remote CSCFs 850. In FIG. 8, operation 819 is expressed as "Modified SDP Offer on bootstrap DC(s)," and the remote IMS AS 860 is expressed as "Remote IMS AS."
- Operation 821: Upon receiving the SIP INVITE request message, the remote IMS AS 860 analyzes the bootstrap data channel media descriptions of the modified SDP offer, and opens a bootstrap data channel and allocates a resource for distributing a data channel application by communicating with a remote DCS 870. In FIG. 8, operation 821 is expressed as "Bootstrap DC establishment."
- Operation 823: The remote IMS AS 860 transmits the SIP INVITE request message including the SDP offer to the remote CSCFs 850. The SDP offer may be modified by the remote IMS AS 860, and in FIG. 8, operation 823 is expressed as "Modified SDP Offer on bootstrap DC(s)". A modification of the SDP offer (or modified SDP offer) may include the operator policy described above or a resource allocation result of the remote DCS 870. In an embodiment of the disclosure, the remote IMS AS 860 may remove a second media description describing a bootstrap data channel between the first user terminal 810 and the remote DCS 870 from the SDP offer, and may add a fourth media description including access information about the remote DCS 870 for establishing a bootstrap data channel between the remote DCS 870 and the second user terminal 880. In an embodiment, an "a=CSMapPersp:" parameter included in the fourth media description may have an "answerer" value as an attribute value.

In an embodiment of the disclosure, the remote IMS AS 860 may add attribute information (e.g., "a=CSMapPersp:" parameter) having an "answerer" value (e.g., a "receiver" value) to a first media description and/or add attribute information (e.g., "a=CSMapPersp:" parameter) having an "offerer" value (e.g., a "sender" value) to a second media description so that a terminating network (e.g., the remote IMS AS 860) may distinguish between two media descriptions (e.g., the first media description and the second media description) corresponding to two bootstrap data channels with the first user terminal 810 and the second user terminal 880. The second media description to which the attribute information is added may be referred to as a fourth media description.
- Operation 825: The remote CSCFs 850 transmit the SIP INVITE request message including the modified SDP offer received from the remote IMS AS 860 to the second user terminal 880. In FIG. 8, operation 825 is expressed as "Modified SDP Offer on bootstrap DC(s)."
- Operation 827: When receiving the SIP INVITE request message including the modified SDP offer from the remote CSCFs 850, the second user terminal 880 transmits an 18x response message to the remote CSCFs 850. In FIG. 8, operation 827 is expressed as "SDP Answer on bootstrap DC(s)." In an embodiment of the disclosure, the 18x response message may include an answer (SDP answer) to the bootstrap data channel-related SDP offer. An embodiment of the disclosure assumes that the second user terminal 880 has agreed to establish all four bootstrap data channels included in the third media description and the fourth media description.
- Operation 829: The remote CSCFs 850 transmit the 18x response message including the SDP answer to the remote IMS AS 860. In FIG. 8, operation 829 is expressed as "SDP Answer on bootstrap DC(s)."
- Operation 831: The remote IMS AS 860 analyzes the SDP answer message, and may reallocate a bootstrap data channel-related resource by communicating with the remote DCS 870 if necessary according to an analysis result. In FIG. 8, operation 831 is expressed as "Modified SDP Answer on bootstrap DC(s)."
- Operation 833: The remote IMS AS 860 modifies the SDP answer, and transmits an 18x response message including the SDP answer to the local CSCFs 820. In FIG. 8, operation 833 is expressed as "Modified SDP Answer on bootstrap DC(s)." A modification of the SDP answer (or modified SDP answer) may include the operator policy described above or a resource allocation result of the remote DCS 870. In an embodiment of the disclosure, the remote IMS AS 860 may add a response to the second media description describing the bootstrap data channel between the first user terminal 810 and the remote DCS 840 to the SDP answer, and may remove the fourth media description for establishing the bootstrap data channel between the remote DCS 870 and the second user terminal 880. In an embodiment, the response to the second media description may include access information about the remote DCS 870, and an "a=CSMapPersp:" parameter included in the second media description may have an attribute value of "offerer."
- Operation 835: Upon receiving the 18x response message from the remote IMS AS 860, the local CSCFs 820 transmit the 18x response message including the modified SDP answer received from the remote IMS AS 860 to the local IMS AS 830. In FIG. 8, operation 835 is expressed as "Modified SDP Answer on bootstrap DC(s)."
- Operation 837: When receiving the 18x response message from the local CSCFs 820, the local IMS AS 830 analyzes the modified SDP answer included in the received 18x response message, and may reallocate a bootstrap data channel-related resource by communicating with the local DCS 840 if necessary according to an analysis result. In FIG. 8, operation 837 is expressed as "Bootstrap DC modification."
- Operation 839: The local IMS AS 830 modifies the modified SDP answer, and transmits an 18x response message including the modified SDP answer to the first user terminal 810 via the local CSCFs 820. In FIG. 8, operation 839 is expressed as "Modified SDP Answer on bootstrap DC(s)." A modification of the SDP answer (or modified SDP answer) may include the foregoing operator policy or a resource allocation result of the local DCS 840. In an embodiment of the disclosure, the local IMS AS 830 may add a response to the first media description describing the bootstrap data channel between the first user terminal 810 and the local DCS 840 to the SDP answer, and may remove the third media description for establishing the bootstrap data channel between the local DCS 840 and the second user terminal 880. In an embodiment, the response to the first media description may include the access information about the local DCS 840, and the "a=CSMapPersp:" parameter included in the first media description may have an attribute value of "offerer."

The remaining call session establishment procedure between the first user terminal 810 and the second user terminal 880 is subsequently performed, and the first user terminal 810 and the second user terminal 880 may obtain data channel applications through the established bootstrap data channels. For example, the first user terminal 810 may establish at least one bootstrap data channel with the second user terminal 880, based on the SDP answer received from the local IMS AS 830, and the first user terminal 810 and the second user terminal 880 may obtain at least one data channel application through the established at least one bootstrap data channel.

Both the second media description and the third media description included in the modified SDP offer received by the remote IMS AS 860 in operation 819 of FIG. 8 may include an offer for a bootstrap data channel having a data channel stream identifier value of 100 and a bootstrap data channel having a data channel stream identifier value of 110. The remote IMS AS 860 may distinguish which media description includes a bootstrap data channel having the remote DCS 870 as an end point, based on the value of the "a=CSMapPersp:" attribute included in the second media description and the third media description that include the same data channel stream identifier values.

Referring to operation 819 of FIG. 8, based on the "a=CSMapPersp:" attribute of the second media description in the modified SDP offer received by the remote IMS AS 860 being configured to a value of offer, the remote IMS AS 860 may analyze data channel stream identifiers 100 and 110, based on the first user terminal 810, to determine that the second media description includes an offer for establishing the bootstrap data channel between the first user terminal 810 (offerer) and the remote DCS 870, and may remove the second media description from the modified SDP offer to be transmitted to the second user terminal 880.

Alternatively, based on the "a=CSMapPersp:" attribute of the third media description in the modified SDP offer received by the remote IMS AS 860 being configured to a value of answerer, the remote IMS AS 860 may analyze data channel stream identifiers 100 and 110, based on the second user terminal, 880 to determine that the third media description includes an offer for establishing the bootstrap data channel between the second user terminal 880 (answerer) and the local DCS 840, and may not remove the third media description from the modified SDP offer to be transmitted to the second user terminal 880.

In an embodiment, the foregoing bootstrap data channel establishment procedure of FIG. 8 may omit some of operations 811 to 839 described in FIG. 8, and/or may further include at least one additional operation. For example, modification of the SDP offer/answer is performed by the IMS ASs (e.g., the local IMS AS 830 and the remote IMS AS 860) in FIG. 8, but the modification of the SDP offer/answer may be performed by the DCSs (e.g., the local DCS 840 and the remote DCS 870) or performed based on cooperation between the IMS ASs 830 and 860 and the DCSs 840 and 870.

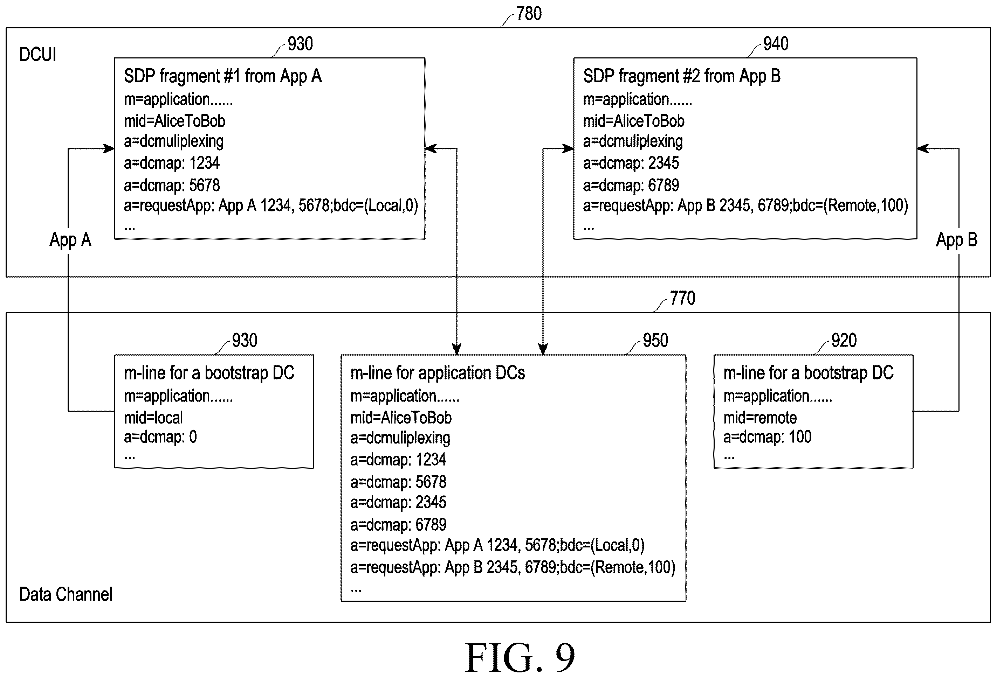

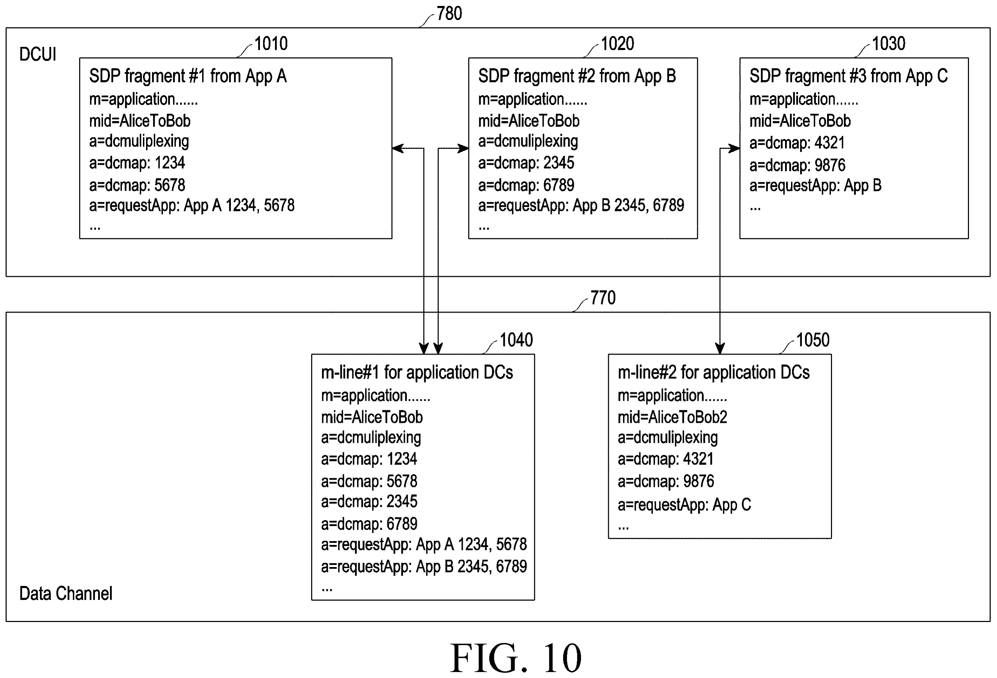

In an embodiment, operation 811 to operation 839 of the data channel establishment procedure of FIG. 8 may be performed in a different order from that shown in FIG. 8. In an embodiment, the procedure of obtaining a data channel application of FIG. 8 may be combined/modified and used with the following procedure of obtaining a data channel application of FIG. 9 and/or the following procedure of obtaining an individual data channel application of FIG. 10 unless contradicted each other.

### [a=CSMapPersp: Attribute]

An "a=CSMapPersp:" attribute according to an embodiment of the disclosure may be described according to the following augmented Backus-Naur form (ABNF) grammar.
attribute-name = CSMapPersp
attribute-value = CSMapPersp-value
CSMapPersp-value = "offerer" / "answerer" / token

In the ABNF grammar, token is a data structure defined in Internet Engineering Task Force (IETF) Request for Comments (RFC) 8866, and refers to a string with a length of 1 or more including an alphabet, a number, and an allowed special character.

A client according to an embodiment of the disclosure may add an "a=CSMapPersp:" attribute as an attribute of a media description including a bootstrap data channel of an SDP offer. The client may be a node that functions as at least one of a user terminal, a network server, or a user terminal and network server depending on a configuration and implementation method of a service. For convenience of explanation, a data channel stream identifier (dcmap-stream-id) of a bootstrap data channel may be mapped to a data channel application provider, based on a user terminal. In an embodiment, mapping is as shown in Table 7.

**[Table 7]**

| Data channel stream identifier | Data channel application provider |
|---|---|
| 0 | Local network operator |
| 10 | Local network operator |
| 100 | Remote network operator |
| 110 | Remote network operator |

The value of the "a=CSMapPersp:" attribute may indicate a criterion by which a data channel stream identifier of a bootstrap data channel provided with an "a=dcmap:" attribute of an associated media description is mapped. For example, the "a=CSMapPersp:" attribute having a value of "offerer" means that the data channel stream identifier of the bootstrap data channel provided with the "a=dcmap:" attribute is mapped to a data channel application provider, based on a client (e.g., the originating user terminal 810) generating an SDP offer. In an embodiment, the data channel stream identifier may be mapped to the data channel application provider as shown in Table 7, based on the client (e.g., the originating user terminal 810) generating an SDP offer.

In another example, the "a=CSMapPersp:" attribute having a value of "answerer" means that the data channel stream identifier of the bootstrap data channel provided with the "a=dcmap:" attribute is mapped to a data channel application provider, based on a client (e.g., the terminating user terminal 880) generating an SDP answer. In an embodiment, the data channel stream identifier is mapped to the data channel application provider as shown in Table 7, based on the client (e.g., the terminating user terminal 880) generating the SDP answer.

According to an embodiment of the disclosure, a client (e.g., the terminating user terminal 880) receiving an SDP offer including a media description for establishing a bootstrap data channel may accept the SDP offer, and may generate and transmit an SDP answer corresponding to the SDP offer. In an embodiment, the SDP answer may include media descriptions corresponding to the SDP offer. In an embodiment, when the media description including the bootstrap data channel in the SDP offer includes the "a=CSMapPersp:" attribute, a media description of the SDP answer may include an "a=CSMapPersp:" attribute having the same value as the "a=CSMapPersp:" attribute of the SDP offer.

An "a=CSMapPersp:" attribute according to an embodiment of the disclosure may be omitted if necessary. An "a=CSMapPersp:" attribute may be omitted when a receiving node may fully understand context of the "a=CSMapPersp:" attribute by utilizing associated information. For example, an "a=CSMapPersp:" attribute having a value of "offerer" in an SDP offer may be omitted, and similarly, an attribute having a value of "answerer" in the SDP answer may be omitted. In embodiments of the disclosure, a client operation is described assuming that an "a=CSMapPersp:" attribute has a value of "offerer" or "answerer", but "offerer" or "answerer" is an example of a criterion for mapping between a data channel stream identifier of a bootstrap data channel and a data channel application provider, and other values (e.g., "caller"/"callee," "dtls-client"/"dtls-server," or "sender"/"receiver") may also be actually used.

Information about a reference UE according to an embodiment of the disclosure may be signaled by selectively using a declarative attribute having no value. For example, a case in which a media description ("m=" line) including a bootstrap data channel includes an "a=csmap-offerer-persp" attribute may mean that a data channel stream identifier of the bootstrap data channel is mapped based on a user terminal (e.g., the originating user terminal 810) that transmits (or has transmitted) an SDP offer including the media description. The "a=csmap-offerer-persp" attribute may indicate an "a=CSMapPersp:" attribute having a value of "offerer".

In an embodiment, a case in which a media description ("m=" line) including a bootstrap data channel includes an "a=csmap-answerer-persp" attribute may mean that a data channel stream identifier of the bootstrap data channel is mapped based on a user terminal (e.g., the terminating user terminal 880) that transmits (or will transmit) an SDP answer including the media description. The "a=csmap-answerer-persp" attribute may indicate an "a=CSMapPersp:" attribute having a value of "answer".

Information about a reference UE according to an embodiment of the disclosure may be signaled by using a declarative attribute having no value. For example, a case in which a media description ("m=" line) including a bootstrap data channel includes an "a=csmap-peer-persp" attribute (or an "a=csmap-remote-persp" attribute or an "a=csmap-receiver-persp" attribute) may mean that a data channel stream identifier of the bootstrap data channel is mapped based on a user terminal that receives an SDP offer or an SDP answer including the media description. Accordingly, a case in which the SDP offer includes the "a=csmap-peer-persp" attribute may mean that the data channel stream identifier of the bootstrap data channel is mapped based on a user terminal to receive the SDP offer. In an embodiment, a case in which the SDP offer does not include the "a=csmap-peer-persp" attribute may mean that the data channel stream identifier of the bootstrap data channel is mapped based on a user terminal that transmits the SDP offer.

In an embodiment, an "a=csmap-peer-persp" attribute may indicate an "a=CSMapPersp:" attribute having a value of "peer" (or a value of "remote" or a value of "receiver"). The value of "peer" (or value of "remote" or value of "receiver") may mean that a data channel stream identifier of an "a=dcmap:" attribute relating to a bootstrap data channel included in a media description including "a=CSMapPersp:" is written based on a user terminal transmitting an SDP offer (the first user terminal 810 of an embodiment of the disclosure) or a user terminal transmitting an SDP answer (the second user terminal 880 of an embodiment of the disclosure). Accordingly, the "a=csmap-peer-persp" attribute may be interpreted differently depending on whether the "a=csmap-peer-persp" attribute is included in the SDP offer or the SDP answer.

For example, the "a=csmap-peer-persp" attribute being included in the SDP offer may mean that the data channel stream identifier of the "a=dcmap:" attribute relating to the bootstrap data channel included in the media description including "a=CSMapPersp:" is written based on a user terminal receiving the SDP offer. However, the "a=csmap-peer-persp" attribute being included in the SDP answer may mean that the data channel stream identifier of the "a=dcmap:" attribute relating to the bootstrap data channel included in the media description including "a=CSMapPersp:" is written based on a user terminal receiving the SDP answer.

In an embodiment, a case in which the SDP answer includes the "a=csmap-peer-persp" attribute may mean that the data channel stream identifier of the bootstrap data channel is mapped based on the user terminal to receive the SDP answer. However, a case in which the SDP answer does not include the "a=csmap-peer-persp" attribute may mean that the data channel stream identifier of the bootstrap data channel is mapped based on a user terminal transmitting the SDP answer.

### [Multiple DCA - FIG. 9]

In a communication system according to various embodiments of the disclosure, a service (e.g., a real-time interaction service) may include one or more data channel applications, and each of the data channel applications may use one or more data channels to realize application logic.

FIG. 9 illustrates an SDP generation procedure of a user terminal supporting one or more data channel applications in a communication system according to various embodiments of the disclosure.

Referring to FIG. 9, a data channel layer 770 may configure a first bootstrap data channel having a data channel stream identifier value of 0 with a first media description 910 having an "a=mid:" attribute value of "local", and may configure a second bootstrap data channel having a data channel stream identifier value of 100 with a second media description 920 having an "a=mid:" attribute value of "remote." In FIG. 9, the first media description is expressed as "m-line for a bootstrap DC," and the second media description is expressed as "m-line for a bootstrap DC."

A DCUI 780 may obtain data channel application AppA via the first bootstrap data channel, and may obtain data channel application AppB via the second bootstrap data channel. It is assumed that each of AppA and AppB requires establishment of two data channels to realize application logic. In an embodiment, to establish a data channel, AppA may generate a first SDP fragment 930, and AppB may generate a second SDP fragment 940, thereby requesting a data channel layer 770 to establish a data channel. In FIG. 9, the first SDP fragment is expressed as "SDP fragment #1 from AppA," and the second SDP fragment is expressed as "SDP fragment #2 from AppB." The data channel layer 770 may integrate the two SDP fragments (e.g., the first SDP fragment 930 and the second SDP fragment 940) into one media description 950, and may perform an SDP offer/answer process with a network and a counterpart user terminal, based on the integrated media description 950.

In FIG. 9, the integrated media description is expressed as "m-line for application DCs." The data channel layer 770 may divide an SDP answer 950 received as a result of the SDP offer/answer process into two SDP fragments 930 and 940, and may forward the first SDP fragment 930 to AppA and the second SDP fragment 940 to AppB. A media description including a data channel according to an embodiment of the disclosure may include at least one of an "a=requestApp:" attribute or an "a=dcmultiplexing" attribute for a process of integrating and re-fragmenting SDP fragments.

### [requestApp Attribute]

The "a=requestApp:" attribute according to an embodiment of the disclosure may be described according to the following ABNF grammar:
attribute-name = requestApp
attribute-value = requestApp-value
requestApp-value = AppID [SP stream-ids][";"bdcid]
AppID = token
stream-ids = dcmap-stream-id *("," dcmap-stream-id)
bdcid = ";bdc=(" mid "," dcmap-stream-id ")"
dcmap-stream-id = 1*5DIGIT
mid = token

The AppID parameter indicates an identifier of a data channel application that owns a corresponding SDP fragment, and may be configured to, for example, a unique value by application logic of the data channel application. The stream-ids parameter indicates a list of data channel stream identifiers associated with the data channel application identified by the AppID parameter, and the bdcid parameter indicates information for identifying a bootstrap data channel used to obtain the data channel application identified by the AppID parameter.

A client according to an embodiment of the disclosure may add an "a=requestApp:" attribute as an attribute of a media description including a data channel of an SDP offer. The client may function as at least one of a user terminal, a network server, or a user terminal and network server depending on a configuration and implementation method of a service. When the "a=requestApp:" attribute includes a bdcid parameter, an "a=CSMapPersp:" attribute for signaling a criterion for mapping a data channel stream identifier of a bootstrap data channel provided by the bdcid parameter and a data channel application provider may be further included.

According to an embodiment of the disclosure, a client that receives an SDP offer including a media description for establishing a data channel may accept the SDP offer, may generate an SDP answer corresponding to the SDP offer, and may transmit the generated SDP answer. In an embodiment, the client may accept establishment of some of the data channels in the SDP offer, and an "a=dcmap:" attribute associated with a rejected data channel may be removed from the SDP answer. In an embodiment, a data channel stream identifier value corresponding to the rejected data channel may also be removed from a stream-ids parameter of an "a=requestApp:" attribute included in the SDP offer.

Referring to FIG. 9, an SDP fragment generated by a data channel application may further include an "a=mid:" attribute for identifying a media description to be integrated. The parameter for identifying the media description to be integrated may be internally processed by an API provided by the data channel layer 770 to the DCUI 780 without including a client "a=mid:" attribute.

In an embodiment, the API provided by the data channel layer 770 to the DCUI 780 may provide information necessary to generate an SDP fragment including information for configuring the value of the "a=mid:" attribute and information for requesting a data channel having a data channel stream identifier in which an individual data channel application does not conflict with a data channel associated with another data channel application.

### [dcmultiplexing Attribute]

An "a=dcmultiplexing" attribute according to an embodiment of the disclosure may be defined as an attribute having no parameter.
attribute-name = demultiplexing
attribute-value = N/A

A client according to an embodiment of the disclosure may add an "a=dcmultiplexing" attribute as an attribute of a media description that includes a data channel of an SDP offer. A case in which the "a=dcmultiplexing" attribute exists may mean that associated media descriptions provide data channels for different data channel applications together, and a case in which the "a=dcmultiplexing" attribute does not exist may mean that associated media descriptions provide data channels only for one data channel application.

FIG. 10 illustrates an SDP generation procedure of a user terminal supporting one or more data channel applications in a communication system according to various embodiments of the disclosure.

Referring to FIG. 10, a data channel layer 770 may generate a first media description 1040 by integrating a first SDP fragment 1010 and a second SDP fragment 1020 that include an "a=dcmultiplexing" attribute, and may generate a second media description 1050 only for a third SDP fragment 1030 including no "a=dcmultiplexing" attribute. In FIG. 10, the first SDP fragment is expressed as "SDP fragment #1 from AppA," the second SDP fragment is expressed as "SDP fragment #2 from AppB," the third SDP fragment is expressed as "SDP fragment #3 from AppC," the first media description is expressed as "m-line#1 for application DCs," and the second media description is expressed as "m-line#2 for application DCs."

According to an embodiment of the disclosure, a client that receives an SDP offer including a media description for establishing a bootstrap data channel may accept the SDP offer, may generate an SDP answer corresponding to the SDP offer, and may transmit the generated SDP answer. In an embodiment, the media description of the SDP offer includes an "a=dcmultiplexing" attribute, and when the client to generate an SDP answer does not support integration of SDP fragments into a single media description, the client to generate the SDP answer may reject the entire media description (e.g., configure a port number of the media description to 0), may generate an SDP answer from which the "a=dcmultiplexing" attribute is omitted, and may transmit the generated SDP answer. Upon receiving the SDP answer, a client having transmitted the SDP offer may reoffer an SDP modified not to include the "a=dcmultiplexing" attribute.

In the communication system according to an embodiment of the disclosure, a media description including a bootstrap data channel may also provide a data channel for a data channel application. In an embodiment, the media description providing the bootstrap data channel and the data channel for the data channel application together may include at least one of an "a=requestApp:" attribute or an "a=dcmultiplexing" attribute described above.

A client according to an embodiment of the disclosure may add an "a=dcmultiplexing" attribute as a media description attribute of an initial SDP offer for establishing a bootstrap data channel. A case in which the "a=dcmultiplexing" attribute exists in the media description including the bootstrap data channel means that the client may establish a data channel associated with a data channel application by including the data channel in the media description including the bootstrap data channel or a media description providing a data channel associated with another data channel application after obtaining the data channel application through the bootstrap data channel.

A client that receives an SDP offer including a media description for establishing a bootstrap data channel according to an embodiment of the disclosure may accept the SDP offer, may generate an SDP answer corresponding to the SDP offer, and may transmit the generated SDP answer. In an embodiment, when the media description of the SDP offer includes an "a=dcmultiplexing" attribute and the client to generate the SDP answer does not support providing a bootstrap data channel and a data channel application-related data channel with a single media description as described above, the client to generate the SDP answer may reject the entire media description (e.g., configure a port number of the media description to 0), and may generate an SDP answer from which the "a=dcmultiplexing" attribute is omitted. Here, the generated SDP answer may include a rejection reason. Upon receiving the SDP answer, a client having transmitted the SDP offer may reoffer an SDP modified not to include the "a=dcmultiplexing" attribute.

In another embodiment of the disclosure, a case in which an "a=dcmultiplexing" attribute exists in a media description including a bootstrap data channel of an SDP offer means that the client may establish a data channel associated with a data channel application by including the data channel in the media description including the bootstrap data channel after obtaining the data channel application through the bootstrap data channel. In an embodiment, as described above, the client that receives the SDP offer may generate an SDP answer to accept the SDP offer depending on whether the foregoing function is supported, or may reject the entire media description including the "a=dcmultiplexing" attribute and generate an SDP answer from which the "a=dcmultiplexing" attribute is omitted, and the generated SDP answer may include a rejection reason.

The "a=dcmultiplexing:" attribute according to an embodiment of the disclosure may be described according to an ABNF grammar having the following additional parameters.
attribute-name = demultiplexing
attribute-value = demultiplexing-value
demultiplexing-value = "no" / "bdc-1app'' / "bdc-mapp" / "non-bdc" / "yes" / token

The meaning of the value of the "a=dcmultiplexing:" attribute may be configured, for example, as in Table 8.

**[Table 8].**

| demultiplexing-value | Data channel application provider |
|---|---|
| "no" | A bootstrap data channel and a data channel for each data channel application are supported respectively by separate media descriptions. |
| "bdc-1app" | A media description including a bootstrap data channel supports a data channel for one data channel application. A media description not including a bootstrap data channel is unable to support data channels for two or more data channel applications. |
| "bdc-mapp" | A media description including a bootstrap data channel is able to support a data channel for one or more data channel applications, and a media description not including a bootstrap data channel is unable to support data channels for two or more data channel applications |
| "non-bdc" | A media description including a bootstrap data channel is unable to support a data channel for a data channel application, and a media description not including a bootstrap data channel is able to support data channels for two or more data channel applications. |
| "yes" | A media description including a bootstrap data channel is able to support a data channel for one or more data channel applications, and a media description not including a bootstrap channel is also able to support data channels for two or more data channel applications. |

According to an embodiment of the disclosure, a client may perform a negotiation (e.g., a capability negotiation) for a series of operations to be subsequently performed by adding the "a=dcmultiplexing:" attribute to a media description for establishing a bootstrap data channel of an SDP offer. For example, when a client that receives an SDP offer in which the value of the "a=dcmultiplexing:" attribute is configured to "yes" is unable to support an operation described in Table 8, the client may reject the entire media description including the "a=dcmultiplexing:" attribute, and may generate an SDP answer by modifying the value of the "a=dcmultiplexing:" attribute according to a capability of the client (e.g., by configuring the value of the "a=dcmultiplexing:" attribute to "no"). A client that receives the SDP answer may reoffer a modified SDP (e.g., an SDP in which the value of the "a=dcmultiplexing:" attribute is modified to "no") based on the SDP answer.

In another example, when a client that receives an SDP offer with the value of the "a=dcmultiplexing:" attribute configured to "yes" is unable to support the operation described in Table 8, the client may accept a media description including the "a=dcmultiplexing:" attribute, but may generate an SDP answer by modifying the value of the "a=dcmultiplexing:" attribute according to a capability of the client (e.g., by configuring the value of the "a=dcmultiplexing:" attribute to "no"). A client having transmitted the SDP offer (e.g., the client having transmitted the SDP offer with the value of the "a=dcmultiplexing:" attribute configured to "yes") may receive the SDP answer generated by modification according to the capability of the client (e.g., by configuring the value of the "a=dcmultiplexing:" attribute to "no"), and the client receiving the SDP answer may reoffer a modified SDP (e.g., an SDP with the value of the "a=dcmultiplexing:" attribute modified to "no") based on the SDP answer.

In another embodiment of the disclosure, a client may establish a bootstrap data channel via a process of exchanging (or transmitting and receiving) a first SDP offer and/or a first SDP answer including a first media description providing bootstrap data channel configuration information (hereinafter, for convenience of explanation, referred to as a "first SDP offer/answer process"). In an embodiment, the first media description may additionally include an "a=adcmultiplexing" attribute. The "a=adcmultiplexing" attribute may indicate whether the client transmitting the first SDP offer or the first SDP answer is able to support an application data channel multiplexing function. The application data channel multiplexing function refers to a function of providing information for configuring data channels for two or more data channel applications with a single media description. Fail to support the application data channel multiplexing function means that information for configuring data channels only for one data channel application may be provided with a single media description.

For example, the client may obtain a first data channel application through the bootstrap data channel, and may perform a process of exchanging (or transmitting and receiving) a second SDP offer and/or a second SDP answer including the first media description and a second media description (hereinafter, for convenience of explanation, referred to as a "second SDP offer/answer process"). The second media description may include data channel configuration information for the first data channel application. Subsequently, the client may obtain a second data channel application through the bootstrap data channel, and may perform a process of exchanging (or transmitting and receiving) a third SDP offer and/or a third SDP answer for data channel establishment for the second data channel application (hereinafter, for convenience of explanation, referred to as a "third SDP offer/answer process"). In the third SDP offer/answer process, when the client supports the data channel multiplexing function, the client may add data channel configuration information for the second data channel application to the second media description. However, when the client does not support the data channel multiplexing function, the client may add a third media description for providing the data channel configuration information for the second data channel application.

To use the application data channel multiplexing function, both clients participating in the SDP offer/answer processes (e.g., the process of exchanging (or sending and receiving) the SDP offers and/or SDP answers) may support the application data channel multiplexing function. For example, the "a=adcmultiplexing" attribute may be used in a negotiation process for using the application data channel multiplexing function. Specifically, a first client using the application data channel multiplexing function may transmit the first SDP offer including the first media description including bootstrap data channel configuration information and the "a=adcmultiplexing" attribute to a second client. Upon receiving the first SDP offer, a second client may accept the first media description, and may transmit the first SDP answer to the first client in response. When the second client supports the application data channel multiplexing function, the first media description included in the first SDP answer may include the "a=adcmultiplexing" attribute. When the second client does not support the application data channel multiplexing function, the first media description of the first SDP answer needs not include the "a=adcmultiplexing" attribute.

When both the first media description included in the first SDP offer and the first media description included in the first SDP answer include the "a=adcmultiplexing" attribute, the application data channel multiplexing function may be used in a subsequent SDP offer/answer process. When at least one of the first media description included in the first SDP offer and the first media description included in the first SDP answer does not include the "a=adcmultiplexing" attribute, the application data channel multiplexing function may not be used in a subsequent SDP offer/answer process.

The "a=adcmultiplexing:" parameter according to an embodiment of the disclosure may have a value of "yes" or "no" as an attribute value. A case in which the first media description providing the bootstrap data channel configuration information includes an "a=adcmultiplexing" parameter having a value of "yes" may indicate that the client transmitting the SDP offer or the SDP answer including the first media description supports the application data channel multiplexing function. A case in which the first media description providing the bootstrap data channel configuration information includes an "a=adcmultiplexing" parameter having a value of "no" may indicate that the client transmitting the SDP offer or the SDP answer including the first media description does not support the application data channel multiplexing function. Although a case in which the client transmitting the SDP offer or SDP answer supports the application data channel multiplexing function or a case in which the client transmitting the SDP offer or SDP answer does not support the application data channel multiplexing function is indicated using the "a=adcmultiplexing" parameter having the value of "yes" or "no" for illustration, the value of the "a=adcmultiplexing" parameter is not limited to "yes" or "no" and may be configured to various other values.

Although it is assumed in the embodiments described in FIG. 9 and FIG. 10 that whether an "a=requestApp:" attribute, an "a=dcmultiplexing" attribute, or an "a=adcmultiplexing" attribute is included and the values thereof are determined by a data channel application operating in the DCUI 780, whether the attributes are included and the values thereof may be determined by the data channel layer 770 or determined by interworking between the DCUI 780 and the data channel layer 770 through an API provided by the data channel layer 770 depending on internal configurations of a user terminal and a client.

The foregoing embodiments illustrate a case in which whether the application channel multiplexing function is supported is provided as a sub-attribute (e.g., an "a=dcmultiplexing" attribute or an "a=adcmultiplexing" attribute) of a media description including bootstrap data channel configuration information. However, whether the application channel multiplexing function is supported may be signaled by different methods depending on implementation. For example, whether the application data channel multiplexing is supported may be signaled by at least one of an SDP and a SIP message at a real-time communication service session level. For example, the SDP may include an "a=dcmultiplexing" attribute or an "a=adcmultiplexing" attribute as a session-level attribute rather than a sub-attribute of a specific media description. In another example, the SIP message may include a code corresponding to a "demultiplexing" or "adcmultiplexing" attribute value as a +sip.app-subtype media feature tag or a feature-capability indicator.

In the communication system according to various embodiments of the disclosure, a client transmits a root URL (e.g., "/") request to a data channel server through a bootstrap data channel to obtain a data channel application. Upon receiving the root URL request, the data channel server may select a data channel application, based on a data channel application selection criterion, and may provide the data channel application to the client. In an embodiment, the data channel application selection criterion may include information about whether application data channel multiplexing described above is supported.

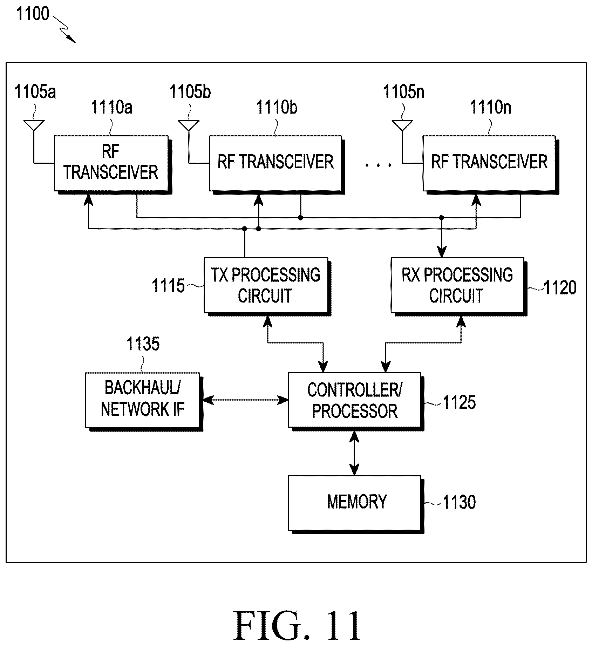

FIG. 11 illustrates the internal structure of a network entity in a wireless communication system according to various embodiments of the disclosure.

The internal structure of the network entity 1100 illustrated in FIG. 11 is only for illustration, and the internal structure of the network entity 1100 may not be limited to the configuration illustrated in FIG. 11.

As illustrated in FIG. 11, the network entity 1100 includes a plurality of antennas 1105a to 1105n, a plurality of radio frequency (RF) transceivers 1110a to 1110n, a transmit (TX) processing circuit 1115, and a receive (RX) processing circuit 1120. In an embodiment, the network entity 1100 includes a controller/processor 1125, memory 1130, and a backhaul or network interface 1135.

The RF transceivers 1110a to 1110n receive input RF signals, such as signals transmitted by user terminals in a wireless communications network, from the antennas 1105a to 1105n. The RF transceivers 1110a to 1110n downconvert the input RF signals to generate IF or baseband signals. The IF or baseband signals are transmitted to the RX processing circuit 1120, and the RX processing circuit 1120 filters, decodes, and/or digitizes the baseband or IF signals to generate processed baseband signals. The RX processing circuit 1120 transmits the processed baseband signals to the controller/processor 1125 for further processing.

The TX processing circuit 1115 receives analog or digital data (such as voice data, web data, email, or interactive video game data) from the controller/processor 1125. The TX processing circuit 1115 encodes, multiplexes, and/or digitizes the output baseband data to generate processed baseband or IF signals. The RF transceivers 1110a to 1110n receive the processed baseband or IF signals output from the TX processing circuit 1115, and upconvert the baseband or IF signals into RF signals that are transmitted via the antennas 1105a to 1105n.

The controller/processor 1125 may include one or more processors or other processing devices that control the overall operation of the network entity 1100. In an embodiment, the network entity 1100 may be any one of various network entities (e.g., an IMS AS, an IMS HSS, a data channel server, and a DC application server) described in FIG. 1 to FIG. 10. The overall operation of the network entity 1100 may be implemented similarly or substantially identically to that described in FIG. 1 to FIG. 10, and thus a detailed description thereof is omitted herein.

For example, the controller/processor 1125 may control reception of forward channel signals and transmission of reverse channel signals by the RF transceivers 1110a to 1110n, the RX processing circuit 1120, and the TX processing circuit 1115 according to well-known principles. The controller/processor 1125 may support additional functions, such as more advanced wireless communication functions. For example, any one of various other functions may be supported by the controller/processor 1125 in the network entity 1100. In some embodiments, the controller/processor 1125 includes at least one microprocessor or microcontroller. The controller/processor 1125 may be configured as at least one processor, and may be referred to as a "processor."

In an embodiment, the controller/processor 1125 may execute programs and other processes that reside in the memory 1130, such as an operating system (OS). The controller/processor 1125 may move data to or out of the memory 1130 as needed by a process being executed. In certain embodiments, the controller/processor 1125 supports communication between network entities. The controller/processor 1125 may move data to or out of the memory 1130 according to a process being executed.

In an embodiment, the controller/processor 1125 is connected to a backhaul or network interface 1135. The backhaul or network interface 1135 allows the network entity 1100 to communicate with other devices or systems through a backhaul connection or a network. The backhaul or network interface 1135 may support communications through any suitable wired or wireless connection(s). For example, when the network entity 1100 is configured as part of a cellular communication system (such as a cellular communication system supporting 5th generation (5G)/New Radio (NR), Long-Term Evolution (LTE), or Long-Term Evolution-Advanced (LTE-A)), the backhaul or network interface 1135 may allow the network entity 1100 to communicate with other network entities through a wired or wireless backhaul connection. When the network entity 1100 is configured as an access point, the backhaul or network interface 1135 may allow the network entity 1100 to communicate with a larger network (such as the Internet) through a wired or wireless local area network or through a wired or wireless connection. The backhaul or network interface 1135 may include a suitable architecture that supports communications via a wired or wireless connection, such as Ethernet or an RF transceiver.

Although FIG. 11 illustrates an example of the network entity 1100, various modifications may be made to FIG. 11. For example, the network entity 1100 may include any number of each component illustrated in FIG. 11. In a specific example, an access point may include a plurality of backhaul or network interfaces 1135, and the controller/processor 1125 may support routing functions of routing data between different network addresses. In another specific example, while it is shown that a single instance of the TX processing circuit 1115 and a single instance of the RX processing circuit 1120 are included, the network entity 1100 may include a plurality of instances of each (such as one per RF transceiver). Various components in FIG. 11 may be combined, further subdivided, or omitted, and additional components may be added according to special needs.

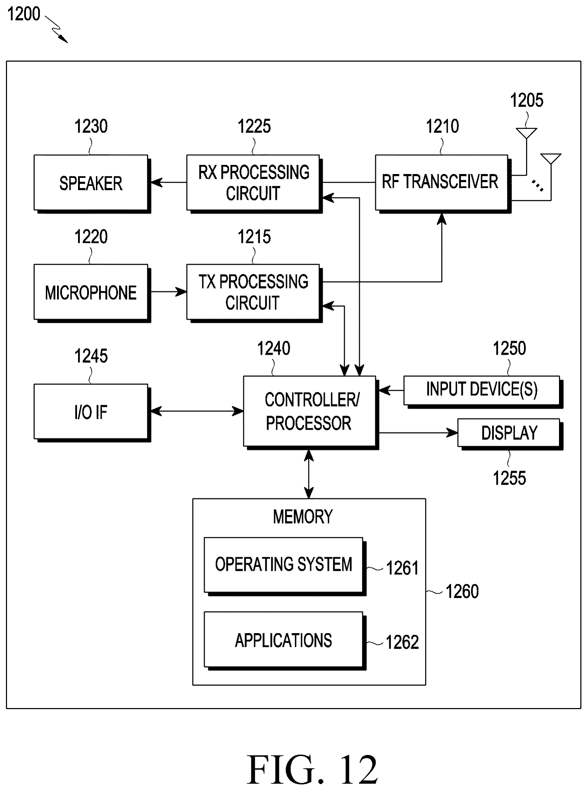

FIG. 12 illustrates the internal structure of a user terminal in a wireless communication system according to an embodiment.

The internal structure of the user terminal 1200 illustrated in FIG. 12 is only for illustration, and the internal structure of the user terminal 1200 may not be limited to the configuration illustrated in FIG. 12.

As illustrated in FIG. 12, the user terminal 1200 includes an antenna 1205, a radio frequency (RF) transceiver 1210, a TX processing circuit 1215, a microphone 1220, and an RX processing circuit 1225. In an embodiment, the user terminal 1200 includes a speaker 1230, a controller/processor 1240, an input/output (I/O) interface (IF) 1245, an input device 1250, a display 1255, and memory 1260. The memory 1260 includes an operating system (OS) 1261 and one or more applications 1262.

The RF transceiver 1210 receives an input RF signal transmitted by a network entity of a wireless communications network from the antenna 1205. The RF transceiver 1210 downconverts the input RF signal to generate an intermediate frequency (IF) or baseband signal. The IF or baseband signal is transmitted to the RX processing circuit 1225, and the RX processing circuit 1225 filters, decodes, and/or digitizes the baseband or IF signal to generate a processed baseband signal. The RX processing circuit 1225 transmits the processed baseband signal to the speaker 1230 (such as for audio data) or to the processor 1240 (such as for web browsing data) for further processing.

The TX processing circuit 1215 receives analog or digital audio data from the microphone 1220, or receives other output baseband data (such as web data, email, or interactive video game data) from the processor 1240. The TX processing circuit 1215 encodes, multiplexes, and/or digitizes the output baseband data to generate a processed baseband or IF signal. The RF transceiver 1210 receives the processed baseband or IF signal output from the TX processing circuit 1215, and upconverts the baseband or IF signal into an RF signal that is transmitted via the antenna 1205.

The controller/processor 1240 may include one or more processors or other processing devices, and may execute the OS 1261 stored in the memory 1260 to control the overall operation of the user terminal 1200. In an embodiment, the overall operation of the user terminal 1200 may be implemented similarly or substantially identically to that described in FIG. 1 to FIG. 10, and thus a detailed description thereof is omitted herein. For example, the controller/processor 1240 may control reception of forward channel signals and transmission of reverse channel signals by the RF transceiver 1210, the RX processing circuit 1225, and the TX processing circuit 1215 according to known principles. In some embodiments, the controller/processor 1240 includes at least one microprocessor or microcontroller.

The controller/processor 1240 may execute other processes and programs stored in the memory 1260, such as processes for beam management. The controller/processor 1240 may move data to or out of the memory 1260 as required by a process being executed. In some embodiments, the processor 1240 is configured to execute the applications 1262, based on the OS 1261 or in response to signals received from network entities or an operator. The controller/processor 1240 is connected to the I/O interface 1245, and the I/O interface 1245 provides the user terminal 1200 with a capability to connect to other devices, such as laptop computers and handheld computers. The I/O interface 1245 is a communication path between such accessories and the processor 1240.

The controller/processor 1240 is connected to the input device 1250 and the display 1255. An operator of the user terminal 1200 may input data to the user terminal 1200 by using the input device 1250. The input device 1250 may be a keyboard, a touchscreen, a mouse, a trackball, a voice input, or any other device capable of operating as a user interface that allows a user to interact with the user terminal 1200. In another example, the input device 1250 may include a touch panel, a (digital) pen sensor, a key, or an ultrasonic input device. The touch panel may recognize a touch input by at least one method, for example, a capacitive method, a pressure-sensitive method, an infrared method, or an ultrasonic method.

The controller/processor 1240 is connected to the display 1255. The display 1255 may be a liquid crystal display, a light-emitting diode display, or other displays capable of rendering text and/or at least limited graphics from web sites.

The memory 1260 is connected to the processor 1240. A portion of the memory 1260 may include random access memory (RAM), and the remaining portion of the memory 1260 may include flash memory or other read-only memory (ROM).

Although FIG. 12 illustrates an example of the user terminal 1200, various changes may be made to FIG. 12. For example, various components in FIG. 12 may be combined, further divided, or omitted, and other components may be added according to special needs. In an example, the controller/processor 1240 may be divided into a plurality of processors, such as one or more central processing units (CPUs) and one or more graphics processing units (GPUs). The controller/processor 1240 may be configured as at least one processor, and may be referred to as a "processor." In an example, although the user terminal 1200 is configured as a mobile phone or a smartphone in FIG. 12, user terminals may be configured to operate as other types of mobile or stationary devices.

According to an embodiment of the disclosure, there is provided a method of a UE in a wireless communication system, and the method includes transmitting, to a network entity, a first message including a session description protocol (SDP) offer including a data channel stream identifier of at least one bootstrap data channel and a first attribute related to mapping information between the data channel stream identifier of the at least one bootstrap data channel and a data channel application provider, and receiving, from the network entity, a second message including an SDP answer corresponding to the SDP offer, and the SDP answer includes access information about the network entity and the first attribute.

According to an embodiment of the disclosure, the first attribute includes information about a reference UE in which mapping information between the data channel stream identifier of the at least one bootstrap data channel and the data channel application provider is described.

According to an embodiment of the disclosure, the reference UE includes one of a UE transmitting the SDP offer or a UE transmitting the SDP answer.

According to an embodiment of the disclosure, the first attribute is configured to one of a first value indicating that the data channel stream identifier of the at least one bootstrap data channel is described based on the UE transmitting the SDP offer or a second value indicating that the data channel stream identifier of the at least one bootstrap data channel is described based on the UE transmitting the SDP answer.

According to an embodiment of the disclosure, the UE includes a data channel-capable multimedia telephony service for Internet protocol multimedia subsystem (MTSI) client in a local operator network of the wireless communication system, and the network entity includes a local Internet protocol multimedia subsystem (IMS) application server (AS) or a data channel server (DCS) of the wireless communication system.

According to an embodiment of the disclosure, there is provided a method of a network entity in a wireless communication system, and the method includes receiving, from a UE, a first message including a session description protocol (SDP) offer including a data channel stream identifier of at least one bootstrap data channel and a first attribute related to mapping information between the data channel stream identifier of the at least one bootstrap data channel and a data channel application provider, and transmitting, to the UE, a second message including an SDP answer corresponding to the SDP offer, and the SDP answer includes access information about the network entity and the first attribute.

According to an embodiment of the disclosure, the first attribute includes information about a reference UE in which mapping information between the data channel stream identifier of the at least one bootstrap data channel and the data channel application provider is described.

According to an embodiment of the disclosure, the reference UE includes one of a UE transmitting the SDP offer or a UE transmitting the SDP answer.

According to an embodiment of the disclosure, the first attribute is configured to one of a first value indicating that the data channel stream identifier of the at least one bootstrap data channel is described based on the UE transmitting the SDP offer or a second value indicating that the data channel stream identifier of the at least one bootstrap data channel is described based on the UE transmitting the SDP answer.

According to an embodiment of the disclosure, the UE includes a data channel-capable multimedia telephony service for Internet protocol multimedia subsystem (MTSI) client in a local operator network of the wireless communication system, and the network entity includes a local Internet protocol multimedia subsystem (IMS) application server (AS) or a data channel server (DCS) of the wireless communication system.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

The electronic device which implements, operates, and performs various embodiments of the disclosure may be one of various types of electronic devices. The electronic device may include, for example, a portable communication device (e.g., a smartphone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., a program) including one or more instructions that are stored in a storage medium (e.g., an internal memory or external memory) that is readable by a machine (e.g., an electronic device). For example, a processor (e.g., a processor) of the machine (e.g., an electronic device) may invoke at least one of the one or more stored instructions from the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A method of a network entity in a wireless communication system, the method comprising:
receiving, from an originating user equipment (UE), a first session description protocol (SDP) offer message for establishing a data channel between an originating network to which the originating UE belongs and a terminating network to which a terminating UE belongs;
generating a second SDP offer message including a first media description and a second media description, based on the first SDP offer message, wherein first attribute information indicating that the first media description is related to a first bootstrap data channel between the originating UE and the terminating network is added to the first media description, and wherein second attribute information indicating that the second media description is related to a second bootstrap data channel between the originating network and the terminating UE is added to the second media description; and
transmitting, to the terminating network, the second SDP offer message.

2. The method of claim 1, wherein the first attribute information includes an attribute value indicating that a first stream identifier (ID) of the first bootstrap data channel is mapped to a data channel application provider for the originating UE.

3. The method of claim 2, wherein the second attribute information includes an attribute value indicating that a second stream identifier (ID) of the second bootstrap data channel is mapped to a data channel application provider for the terminating UE.

4. The method of claim 1, wherein at least one of the first attribute information or the second attribute information enables the terminating network to distinguish the first media description and the second media description, which are respectively related to the first bootstrap data channel and the second bootstrap data channel that have the same stream ID values.

5. The method of claim 1, further comprising:
receiving, from the terminating network, a first SDP answer message corresponding to the second SDP offer message; and
transmitting, to the originating UE, the first SDP answer message .

6. The method of claim 1, wherein the first attribute information is an attribute parameter indicating an entity using the first bootstrap data channel, and is configured to an attribute value indicating a sender, and/or
wherein the second attribute information is an attribute parameter indicating an entity using the second bootstrap data channel, and is configured to an attribute value indicating a receiver.

7. A method of a user equipment (UE) in a wireless communication system, the method comprising:
transmitting, to a network entity, a first session description protocol (SDP) offer message for establishing a data channel between an originating network to which the originating UE belongs and a terminating network to which a terminating UE belongs, wherein the first SDP offer message is modified by the network entity to include at least one of attribute information that enables the terminating network to distinguish a first media description related to a first bootstrap data channel between the originating UE and the terminating network, and a second media description related to a second bootstrap data channel between the originating network and the terminating UE; and
receiving, from the network entity, an SDP answer message corresponding to the first SDP offer message.

8. The method of claim 7, wherein the at least one of attribute information includes first attribute information indicating that the first media description is related to the first bootstrap data channel between the originating UE and the terminating network, and second attribute information indicating that the second media description is related to the second bootstrap data channel between the originating network and the terminating UE.

9. The method of claim 8, wherein the first attribute information includes an attribute value indicating that a first stream identifier (ID) of the first bootstrap data channel is mapped to a data channel application provider for the originating UE, and
wherein the second attribute information includes an attribute value indicating that a second stream identifier (ID) of the second bootstrap data channel is mapped to a data channel application provider for the terminating UE.

10. The method of claim 9, wherein at least one of the first attribute information or the second attribute information enables the terminating network to distinguish the first media description and the second media description, which are respectively related to the first bootstrap data channel and the second bootstrap data channel that have the same stream ID values.

11. A network entity in a wireless communication system, the network entity comprising:
a transceiver; and
a processor connected to the transceiver,
wherein the processor is configured to:
receive, from an originating user equipment (UE) through the transceiver, a first session description protocol (SDP) offer message for establishing a data channel between an originating network to which the originating UE belongs and a terminating network to which a terminating UE belongs;
generate a second SDP offer message including a first media description and a second media description, based on the first SDP offer message, wherein first attribute information indicating that the first media description is related to a first bootstrap data channel between the originating UE and the terminating network is added to the first media description, and wherein second attribute information indicating that the second media description is related to a second bootstrap data channel between the originating network and the terminating UE is added to the second media description; and
transmit, to the terminating network through the transceiver, the second SDP offer message.

12. The network entity of claim 11, wherein the first attribute information includes an attribute value indicating that a first stream identifier (ID) of the first bootstrap data channel is mapped to a data channel application provider for the originating UE, and
wherein the second attribute information includes an attribute value indicating that a second stream identifier (ID) of the second bootstrap data channel is mapped to a data channel application provider for the terminating UE.

13. The network entity of claim 11, wherein at least one of the first attribute information or the second attribute information enables the terminating network to distinguish the first media description and the second media description, which are respectively related to the first bootstrap data channel and the second bootstrap data channel that have the same stream ID values.

14. A user equipment (UE) in a wireless communication system, the UE comprising:
a transceiver; and
a processor connected to the transceiver,
wherein the processor is configured to:
transmit, to a network entity through the transceiver, a first session description protocol (SDP) offer message for establishing a data channel between an originating network to which the originating UE belongs and a terminating network to which a terminating UE belongs, wherein the first SDP offer message is modified by the network entity to include at least one of attribute information that enables the terminating network to distinguish a first media description related to a first bootstrap data channel between the originating UE and the terminating network and a second media description related to a second bootstrap data channel between the originating network and the terminating UE; and
receive, from the network entity through the transceiver, an SDP answer message corresponding to the first SDP offer message.

15. The UE of claim 14, wherein the at least one of attribute information includes first attribute information indicating that the first media description is related to the first bootstrap data channel between the originating UE and the terminating network and second attribute information indicating that the second media description is related to the second bootstrap data channel between the originating network and the terminating UE,
wherein the first attribute information includes an attribute value indicating that a first stream identifier (ID) of the first bootstrap data channel is mapped to a data channel application provider for the originating UE, and
wherein the second attribute information includes an attribute value indicating that a second stream identifier (ID) of the second bootstrap data channel is mapped to a data channel application provider for the terminating UE.
